# EUROPÄISCHE PATENTSCHRIFT

(11) **EP 3 804 002 B1**
(45) Veröffentlichungstag und Bekanntmachung des Hinweises auf die Patenterteilung: **31.08.2022**
(21) Anmeldenummer: 19727976.3
(22) Anmeldetag: 24.05.2019
(51) Int. Cl.: H01M 50/20, H01M 50/502

(54) **ANORDNUNG FÜR ZELLEN ZUR SPEICHERUNG ELEKTRISCHER ENERGIE MIT FEDERKONTAKTELEMENT**
ARRANGEMENT FOR CELLS FOR STORING ELECTRICAL ENERGY WITH SPRING CONTACT ELEMENT
DISPOSITIF POUR CELLULES DESTINÉE À STOCKER DE L'ÉNERGIE ÉLECTRIQUE DOTÉ DE L'ÉLÉMENT DE CONTACT À RESSORT

(30) Priorität: 25.05.2018 EP 18174442
(43) Veröffentlichungstag der Anmeldung: 14.04.2021
(73) Patentinhaber: E-Seven Systems Technology Management Ltd, Valletta, VLT 1455 (MT)
(72) Erfinder: KRÄMER, Thomas, 3140 St. Julian's (MT)
(74) Vertreter: Cohausz & Florack
(86) Internationale Anmeldenummer: PCT/EP2019/063457
(87) Internationale Veröffentlichungsnummer: WO 2019/224351

(56) Entgegenhaltungen:
- WO-A1-2017/207703
- WO-A1-2017/207703
- WO-A1-2018/003291
- WO-A1-2018/003291
- CN-U- 206 480 686
- CN-U- 206 480 686
- DE-C- 515 051
- DE-C- 515 051

## Beschreibung

Die Erfindung betrifft eine Anordnung für Zellen zur Speicherung elektrischer Energie, mit mindestens zwei Zellen, wobei die mindestens zwei Zellen jeweils eine Axialrichtung, einen umfangsseitigen Bereich und zwei Stirnseiten aufweisen, wobei die Stirnseiten einander in Axialrichtung gegenüber liegend angeordnet sind und mindestens ein Polbereich an einer Stirnseite vorgesehen ist, mit mindestens einer Verbindungsplatte, wobei die mindestens zwei Zellen an der mindestens einen Verbindungsplatte angeordnet sind, wobei Kontaktelemente zwischen der mindestens einen Verbindungsplatte und den Polbereichen der mindestens zwei Zellen für einen elektrischen Kontakt vorgesehen sind. Offenbart werden zudem ein Verfahren zur Herstellung einer Anordnung sowie eine Verwendung eines Federkontaktelements.

Zellen zur Speicherung elektrischer Energie werden in vielen Gebieten der Technik eingesetzt. Insbesondere in den derzeit sich schnell entwickelnden Technologien der Elektromobilität und der Energiewirtschaft werden hohe Speicherkapazitäten für elektrische Energie und hohe elektrische Spannungen benötigt. Dies wird üblicherweise dadurch erreicht, dass einzelne primäre und/oder sekundäre Zellen in einer Anordnung für Zellen zur Speicherung elektrischer Energie verschaltet werden, z.B. als Batteriepack.

Die Anordnung soll hierbei einen zuverlässigen elektrischen Kontakt und eine zuverlässige elektrische Verbindung zwischen den Zellen gewährleisten. Gleichzeitig ist eine gewisse mechanische Stabilität erforderlich, beispielsweise gegenüber Vibrationen, Erschütterungen und Stoßbelastungen, welche etwa beim Betrieb eines elektrisch betriebenen Kraftfahrzeugs entstehen. Eine weitere Anforderung ist eine ausreichende thermische Stabilität während des Betriebs der Anordnung, beispielsweise gegenüber einem Erwärmen durch ein Einbringen oder Entnehmen hoher elektrischer Ströme.

Neben Pouch-Zellen bzw. sogenannten Coffee-Bag-Zellen und prismatischen Zellen, deren Geometrie an die Anordnungen angepasst werden können, sind weiterhin Rundzellen für Zellanordnungen interessant. Rundzellen sind in großen Mengen mit verschiedenen Abmessungen verfügbar sowie günstig und wirtschaftlich herzustellen. Jedoch kann die Einbindung und Kontaktierung von Rundzellen in Anordnungen aufgrund der vorgegebenen, in etwa zylindrischen Grundform der Zellen herausfordernd sein.

Die EP 3 096 372 A1 beschreibt ein Batterie-Speichermodul aufweisend eine Mehrzahl von Batterie-Einzelzellen. An einer von den Batterie-Einzelzellen abgewandten Seite einer Parallelplatte ist je eine jeweils unlösbar und elektrisch leitfähig mit der Parallelplatte verbundene Kontaktfeder pro Batterie-Einzelzelle angeordnet.

Schweißverfahren zur Kontaktierung der Zellen können jedoch die Herstellung der Anordnung aufwändig machen und die Kontaktelemente sowie die Zellen thermisch belasten. Im Stand der Technik sind daher auch weitere Möglichkeiten zur Kontaktierung der Zellen in einer Anordnung in Betracht gezogen worden.

Die DE 10 2012 213 273 A1 offenbart beispielsweise eine Vorrichtung zur Kontaktierung von elektrischen Energiespeicherzellen, die jeweils an ihren Polen über ein elektrisch und thermisch leitfähiges Kontaktelement mit einer Leiterplatte verbunden sind. Beispielsweise werden flache Kontaktelemente aus einer pastösen, aushärtenden Masse in den Zwischenraum zwischen Energiespeicherzelle und Leiterplatte gebracht.

In der DE 10 2016 120 841 A1 ist eine Batterie mit verpresster Zellanordnung offenbart, wobei Druckplatten an Batterieanfangsbereich und Batterieendbereich miteinander über Zugelemente verbunden sind und dadurch die Batteriezellen an Verbindungsplatten angedrückt werden. Ein weiterer Aufbau einer Anordnung mit Verbindungsplatten ist in der DE 10 2016 120 835 A1 beschrieben.

Problematisch beim Andrücken der Zellen über ein Verpressen zwischen Platten ist jedoch, dass insbesondere bei Anordnungen mit mehreren in Axialrichtung benachbarten Zellen eine mechanische Überlastung der Polbereiche von einzelnen Zellen festgestellt wurde. Hierbei wurde der Polbereich einzelner Zellen, beispielsweise ein am positiven Pol angeordneter Deckel durch das Anpressen über die Zugelemente verformt, was bis zu einem Ausfall der Zelle führen konnte. Eine solche mechanische Überlastung der Polbereiche trat hierbei vereinzelt und nur an manchen Zellen auf, so dass die Prozesssicherheit bei der Herstellung der entsprechenden Anordnungen verbesserungswürdig ist.

Der vorliegenden Erfindung liegt angesichts dieses Stands der Technik die Aufgabe zugrunde, eine Anordnung für Zellen zur Speicherung elektrischer Energie anzugeben, welche eine einfache und sichere Kontaktierung von Zellen ermöglicht und insbesondere die Nachteile aus dem Stand der Technik vermindert. Zur Lösung der Aufgabe werden zudem ein Verfahren zur Herstellung einer Anordnung sowie eine Verwendung eines Federkontaktelements angegeben.

Diese Aufgabe wird gemäß einer ersten Lehre der Erfindung betreffend eine eingangs genannte Anordnung dadurch gelöst, dass mindestens eines der Kontaktelemente, welches in Kontakt zu einer Zelle steht, als Federkontaktelement ausgestaltet ist, welches in einem verformten Zustand eine Federkraft zur Anlage an dem jeweiligen Polbereich der mindestens zwei Zellen zur Bildung des elektrischen Kontakts zwischen der mindestens einen Verbindungsplatte und Polbereich bereitstellt.

Im Rahmen der Erfindung wurde erkannt, dass bei Anordnungen mit mindestens einer Verbindungsplatte, welche mit den Zellen beispielsweise durch Anpressen in Kontakt steht, eine Überlastung einzelner Zellen zumindest teilweise durch eine Maßabweichung dieser einzelnen Zellen verursacht wird. Großtechnisch hergestellte Zellen können beispielsweise in Axialrichtung signifikante Längenabweichungen bzw. Toleranzen aufweisen. Sind beispielsweise senkrecht zur Axialrichtung benachbarte Zellen vorgesehen, stehen diesen benachbarten Zellen zwischen den Verbindungsplatten näherungsweise der gleiche Bauraum in Axialrichtung zur Verfügung. Bei Zellen, welche aufgrund von Maßabweichungen eine größere Länge in Axialrichtung aufweisen, kommt es daher im Stand der Technik zu einem hohen Druck auf den Polbereichen dieser längeren Zellen, welcher zur mechanischen Überlastung führen kann. Hierbei lastet der hohe Druck auf den Polbereichen, welche üblicherweise an die Elektrodenbereiche im Inneren der Zelle angrenzen und daher gegenüber mechanischen Belastungen empfindlich sind.

Dadurch, dass mindestens eines der Kontaktelemente je Zelle als Federkontaktelement ausgestaltet ist, wird erreicht, dass das jeweilige Federkontaktelement sich bei einem Kontaktieren mit einer Zelle entsprechend der Längenausdehnung der Zelle in Axialrichtung federnd verformen kann. Gleichzeitig stellt das Federkontaktelement in einem verformten Zustand eine Federkraft zur Anlage an dem zugehörigen Polbereich der Zelle zur Bildung des elektrischen Kontakts zwischen der Verbindungsplatte und dem Polbereich bereit, womit eine unlösbare Verbindung des Federkontaktelements und des Polbereichs entfallen kann, beispielsweise eine Lot- oder Schweißverbindung. Die Zellen können somit lösbar in der Anordnung vorgesehen sein.

Insbesondere ist die Federkraft derart bemessen, dass einerseits eine sichere Anlage und damit ein sicherer elektrischer Kontakt zwischen Verbindungsplatte und Polbereich bewirkt wird, welcher auch bei mechanischen Belastungen wie Erschütterungen, Vibrationen und Stoßbelastungen im Wesentlichen beibehalten wird. Die mechanischen Belastungen können hierbei über die vorgesehene Verwendung der Anordnung vorgegeben sein. Andererseits kann die Federkraft auf eine Maximalkraft begrenzt sein, welche indikativ für eine mechanische Überlastung des Polbereichs der Zelle ist.

Unter der Anlage über Federkraft wird hierbei verstanden, dass das Federkontaktelement durch die Anordnung der jeweiligen Zelle und der daraus resultierenden Position des Polbereichs aus einem entspannten Zustand in einen federnd gespannten Zustand gebracht ist, wodurch das Federkontaktelement zumindest teilweise durch die Federkraft an den Polbereich gedrückt wird. Unter einer Anlage wird hierbei insbesondere eine lösbare Anlage verstanden, welche aus der Federkraft resultiert. Der elektrische Kontakt wird hierbei vorzugsweise unter einem Kraftschluss bewirkt, wobei insbesondere keine stoffschlüssige oder formschlüssige Kontaktierung vorliegt. Unter einem Kraftschluss wird hierbei insbesondere verstanden, dass der Kontakt (lediglich) über ein Anpressen an den Polbereich aufgrund der Federkraft bewirkt wird. Die Zelle muss jedoch nicht zwingend durch den Kraftschluss mit dem Federkontaktelement senkrecht zur Axialrichtung fixiert sein.

Die Kontaktelemente und/oder das Federkontaktelement sind insbesondere dafür ausgestaltet, einen Wärmetransport zwischen den Zellen und der Verbindungsplatte zu gewährleisten.

In einer bevorzugten Ausgestaltung können beide Polbereiche jeder Zellen jeweils mit mindestens einem Federkontaktelement in elektrischem Kontakt stehen, wobei für jede Zelle entsprechend mindestens zwei Federkontaktelemente vorgesehen sind. Auf diese Weise werden die Zellen beidseitig (z. B. an beiden Stirnseiten) über die Federkraft eines Federkontaktelements kontaktiert und die Toleranz der Anordnung gegenüber Maßabweichungen weiter erhöht.

In einer alternativen Ausgestaltung ist für jede Zelle lediglich ein Federkontaktelement vorgesehen, welches beispielsweise den elektrischen Kontakt zu einem der Polbereiche bewirkt, beispielsweise für den positiven oder negativen Pol. Der jeweils andere Polbereich kann beispielsweise in direktem Kontakt über eine Anlage zu einer weiteren Verbindungsplatte stehen. Ebenfalls kann der Kontakt des jeweils anderen Polbereichs zu einer weiteren Verbindungsplatte über ein starres (d.h. ohne wesentliche federnde Eigenschaften) ausgebildetes Kontaktelement bewirkt werden, welches zwischen der weiteren Verbindungsplatte und dem anderen Polbereich angeordnet ist.

Die Federkontaktelemente weisen federnde Eigenschaften auf. Es ist möglich, dass die Federkontaktelemente ein linear-elastisches Verhalten oder ein nichtlinearelastischen Verhalten zeigen. Unter einem linear-elastischen Verhalten wird insbesondere verstanden, dass die Federkontaktelemente zumindest für einen Bereich der Verformung ein linear-elastisches Verhalten aufweisen, wobei den Federkontaktelementen eine Federkonstante zugeordnet werden kann. Der Bereich mit einem linear-elastischen Verhalten ist hierbei insbesondere der Bereich, in welchem die Federkontaktelemente in der Anordnung unter Berücksichtigung der Maßabweichungen der Zellen verformt werden. Ein nichtlinear-elastisches Verhalten kann beispielsweise dadurch gegeben sein, dass die Federkraft mit der Einfederung überproportional ansteigt (progressives Federverhalten) oder unterproportional ansteigt (degressives Federverhalten). Ein progressives Federverhalten kann den elektrischen Kontakt verbessern. Ein degressives Federverhalten kann für eine Vermeidung der Überlastung der Polbereiche vorteilhaft sein.

Die mindestens zwei Zellen sind vorzugsweise als Rundzellen bzw. näherungsweise zylindrische Zellen ausgestaltet, wobei die Axialrichtung der Achse des Zylinders und der umfangsseitige Bereich der Mantelfläche entsprechen. Weitere Zelltypen sind jedoch denkbar, insbesondere prismatische Zellen oder Zellen mit einem runden Querschnitt, welcher von einer Kreisform abweicht, beispielsweise mit einem elliptischen Querschnitt. Vorzugsweise sind Hardcase-Zellen vorgesehen, insbesondere Zellen mit einem Gehäuse, einer Ummantelung oder Verkapselung der Elektroden bzw. des Elektrolyts im Inneren der Zelle.

Die verwendeten Zellen können eine vorgegebene Maßabweichung aufweisen. Beispielsweise ist eine Nennlänge für die Zellen vorgegeben, wobei die Abweichung von der Nennlänge mindestens ±0,1 %, insbesondere mindestens ±0,3 % betragen kann. Beispielsweise ist eine Nennlänge von 65,0 mm vorgesehen (z.B. bei einer "18650"-Zelle mit 18,0 mm Nenndurchmesser) und die Abweichung bzw. Toleranz beträgt ±0,2 mm (±0,31 %) oder +0,2 mm und -0,25 mm (+0,31 % und -0,38 %). Ebenso denkbar sind Zellen mit Nenndurchmesser 21,0 mm und Nennlänge 70,0 mm ("21700"-Zelle) mit entsprechenden Abweichungen von mindestens ±0,1 %, insbesondere mindestens ±0,3 %.

Die Polbereiche sind jeweils einem elektrischen Pol der Zelle zugeordnet und sind zur elektrischen Kontaktierung des Pols vorgesehen. Mindestens einer der Polbereiche erstreckt sich über zumindest einen Abschnitt der Stirnseite, insbesondere über einen Abschnitt in der Mitte der Stirnseite. Denkbar ist auch, dass an einer Stirnseite zwei Polbereiche vorgesehen sind, welche einzeln oder beide über Federkontaktelemente kontaktiert werden.

Die mindestens eine Verbindungsplatte ist für eine elektrische Verbindung der Zellen untereinander eingerichtet. Hierbei kann die Verbindungsplatte eine serielle Schaltung von Zellen, eine parallele Schaltung von Zellen oder eine Kombination hieraus (Mischschaltung) bewirken, womit Kapazität und Spannung der Anordnung bestimmt werden können. Die Verbindungsplatte ist plattenförmig und insbesondere flächig, d.h. die Verbindungsplatte weist insbesondere eine im Vergleich zu einer Dicke eine große Länge und Breite auf, wobei die durch Länge und Breite gebildete Oberfläche näherungsweise eben ist.

Verbindungsplatten, welche auf beiden Seiten einen elektrischen Kontakt zu Zellen bereitstellen, können mindestens eine Durchkontaktierung aufweisen. Hiermit werden in Axialrichtung benachbarte Zellen miteinander kontaktiert. Eine einfache Ausgestaltung einer Durchkontaktierung wird durch eine metallische Hülse gegeben, welche durch die Verbindungsplatte verläuft und beispielsweise elektrische leitfähige Schichten auf beiden Seiten der Verbindungsplatte miteinander elektrisch leitend verbindet. In einer bevorzugten Ausgestaltung wird mindestens eine Durchkontaktierung durch eine galvanische Beschichtung mindestens eines Durchgangs durch die Verbindungsplatte gebildet. Beispielsweise wird die Verbindungsplatte durchbohrt und die Bohrung mit einer Harzschicht versehen. Die Harzschicht dient beispielsweise einer elektrischen Isolierung eines Metallkerns von der Durchkontaktierung. Die Harzschicht kann optional für die Maßgenauigkeit erneut durchbohrt werden. Auf die Harzschicht wird (z.B. galvanisch) eine leitfähige Schicht aufgebracht, welche die Kontaktierung von Zellen auf beiden Seiten der Verbindungsplatte erlaubt.

In einer einfachen Ausführungsform ist die Verbindungsplatte als einfache Platte aus einem leitfähigen Material ausgestaltet, z.B. eine Kupfer-, Aluminium-, Edelstahlplatte oder eine Platte aus einer Legierung hieraus, welche insbesondere an einer oder beiden Außenseiten mit einer elektrisch isolierenden Schicht versehen ist. Hierbei führt die einfache Platte aus einem leitfähigen Material bei der Verwendung der Anordnung einen Strom von und zu den Polbereichen der Zellen. Ist auf der Verbindungsplatte außen eine isolierende Schicht angeordnet, kann die isolierende Schicht an der Position der Kontaktelemente unterbrochen sein, um einen elektrischen Kontakt zwischen Kontaktelement und der Platte aus leitfähigem Material zu erlauben. Als Platte aus einem leitfähigen Material kann ebenso ein Metallverbundwerkstoff verwendet werden, beispielsweise ein Aluminiumkern oder Edelstahlkern, welcher ein- oder beidseitig mit einer Kupferschicht plattiert ist.

Die Verbindungsplatte ist insbesondere dafür eingerichtet, einen Wärmetransport zwischen den Zellen zu bewirken. Hierdurch können Temperaturunterschiede zwischen den einzelnen Zellen ausgeglichen werden, damit die einzelnen Zellen unter möglichst ähnlichen Temperaturen betrieben werden können. Ebenso kann die Verbindungsplatte dafür eingerichtet sein, einen Wärmetransport von den Zellen nach außen zu bewirken, beispielsweise mit mindestens einem Wärmeabfuhrelement, wobei die Wärme beispielsweise an ein Gehäuse und/oder mindestens ein Kühlelement abgegeben wird. Denkbar ist ebenso, dass die Zellen über die Verbindungsplatte temperiert und beispielsweise vorgewärmt werden.

In einer bevorzugten Ausführung ist die Verbindungsplatte als Schichtverbundmaterial ausgeführt, aufweisend mindestens einen Metallkern und mindestens eine leitfähige Schicht. Auf dem Metallkern ist einseitig oder beidseitig eine Isolationsschicht bzw. ein Dielektrikum angeordnet, auf welcher wiederum eine elektrisch leitfähige Schicht angeordnet ist. Die Verbindungsplatte kann als IMS (insulated metal core)-Platte ausgestaltet sein. Vorzugsweise führt der Metallkern bei Verwendung der Anordnung keinen Strom und ist beispielsweise für einen effektiven Wärmetransport vorgesehen. Der Metallkern basiert beispielsweise auf Aluminium, Kupfer und/Edelstahl. Alternativ können als Kernschichten bzw. Substrat auch andere geeignete Materialien eingesetzt werden, beispielsweise Keramik, polymerbasierte Werkstoffe oder Verbundwerkstoffe wie beispielsweise FR4 und FR5. Die Verbindungsplatten können weiter als Hochstromleiterplatten ausgeführt sein, beispielsweise auf Basis von FR4- und/oder FR5-Werkstoffen. Die Verbindungsplatten können als Dickkupfer-Leiterplatten ausgeführt sein. Insbesondere für Mischschaltungen können die Verbindungsplatten auch strukturierte Leiterbahnen aufweisen. Beispielsweise können Schichtverbundmaterialien vorgesehen sein, welche eine Strukturierung zur selektiven Kontaktierung aufweisen, etwa auf Grundlage der "Iceberg"-Technologie oder mit auf der Platte verlegten und befestigten Drähten ("wire laid") sowie Inlay Boards oder Power Combi Boards.

Ebenso möglich sind kombinierte Leiterplatten, wobei insbesondere mindestens zwei Leiterplatten mit verschiedenen Abmessungen (beispielsweise mit verschiedenen Schichtdicken einer leitfähigen Schicht) miteinander in einer Verbindungsplatte kombiniert sind. Beispielsweise sind Combi-Board-Leiterplatten vorzugsweise ohne Verbindungselemente wie Steckverbinder zwischen den mindestens zwei Leiterplatten ausgebildet.

Auf der elektrisch leitfähigen Schicht und/oder der Außenseite der Verbindungsplatte ist insbesondere einseitig oder beidseitig eine elektrisch isolierende Schicht vorgesehen. Die Verbindungsplatte kann für eine Kontaktierung von Zellen auf einer Seite der Verbindungsplatte ausgestaltet sein (z.B. vierschichtig, insbesondere in der Abfolge: Metallkern - isolierende Schicht (Dielektrikum) - leitfähige Schicht - isolierende Schicht) oder für eine Kontaktierung von Zellen auf beiden Seiten der Verbindungsplatte ausgestaltet sein (z.B. siebenschichtig, insbesondere in der Abfolge: isolierende Schicht - leitfähige Schicht - isolierende Schicht - Metallkern - isolierende Schicht - leitfähige Schicht - isolierende Schicht).

Auf den Verbindungsplatten können weitere elektronische Bauelemente angeordnet sein, welche insbesondere zu den Verbindungsplatten bzw. zu elektrisch leitfähigen Schichten oder Leiterbahnen der Verbindungsplatten im elektrischen Kontakt stehen.

Beispielsweise sind als elektronische Bauelemente Sensoren wie Temperatursensoren vorgesehen, welche einer Überwachung des Betriebs der Anordnung bei einer Entladung oder Ladung der Zellen dienen können, um beispielsweise eine mögliche Überhitzung der Anordnung oder einzelner Zellen zu ermitteln.

Möglich sind hierbei Temperatursensoren auf Basis von temperaturabhängigen Widerstandsänderungen wie Heißleiter (NTC) und/oder Kaltleiter (PTC), z.B. PTC basierend auf Platin (z.B. Pt100, Pt1000; ebenso Pt50, Pt200, Pt500), basierend auf Nickel (z.B. Ni100, Ni1000) oder auf Silizium (z.B. KTY). Ebenso können Thermoelemente (beispielsweise der Typen K, J, N, E, T, R, S und/oder B) oder Temperatursensoren mit integriertem Signalwandler verwendet werden. Ebenfalls sind Temperatursensoren basierend auf einer Temperaturabhängigkeit einer Resonanzfrequenz möglich, z.B. Schwingquarz-Temperatursensoren.

Als weitere elektronische Bauelemente können auf und/oder in der Verbindungsplatte elektrische Sicherungselemente vorgesehen sein. Die Sicherungselemente können zur Absicherung einzelner Komponenten der Anordnung, beispielsweise einzelner Zellen gegenüber einem Überstrom dienen. Beispielsweise ist mindestens eine Leiterbahnsicherung in einer elektrisch leitfähigen Schicht der Verbindungsplatte vorgesehen. Eine Leiterbahnsicherung kann beispielsweise als Querschnittsverjüngung einer Leiterbahn vorgesehen sein, wobei der Querschnitt entsprechend des vorgesehenen zulässigen Stroms ausgewählt sein kann. Insbesondere ist für jede Zelle oder jedes Kontaktelement eine Leiterbahnsicherung vorgesehen, wobei beispielsweise um das Kontaktelement ein isolierender Bereich der Verbindungsplatte vorgesehen ist, welcher lediglich durch eine oder mehrere verjüngte Leiterbahnen unterbrochen ist. Entsprechend kann die leitfähige Schicht einer Verbindungsplatte als Sicherungselement mitgenutzt werden, was die Wirtschaftlichkeit erhöht.

Ebenso kann mindestens ein gemeinsames Sicherungselement für mehrere oder alle Zellen der Anordnung, beispielsweise im Zusammenhang mit Anschlusselementen. Beispielsweise sind mehrere gemeinsame Sicherungselemente mit verschiedenen Ansprechzeiten vorgesehen (z.B. primäres, sekundäres und tertiäres Sicherungselement).

Sicherungselemente können auf der Verbindungsplatte angeordnet sein, z.B. in Form von kontaktierten Schmelzsicherungen wie beispielsweise Bonddrahtsicherungen. Ebenso können rückstellende Sicherungselemente vorgesehen sein, beispielsweise auf Grundlage von Kaltleitern unter Nutzung eines Temperatureffekts (etwa auf Keramikbasis und/oder Polymerbasis) oder rückstellende elektronische Sicherungen (etwa auf Halbleiterbasis wie z.B. mindestens ein MOSFET).

Sämtliche mit der Verbindungsplatte verbundenen elektronischen Bauelemente, Steckverbinder und/oder Schraubverbinder können mit verschiedenen Methoden mit der Verbindungplatte verbunden und kontaktiert werden, beispielsweise über Through-Hole-Technology (THT) und/oder Surface Mounted Technology (SMT). Vorteilhaft sind ebenso Verbindungen mit der Einpresstechnik, welche eine wirtschaftliche Verbindung der Bauelemente mit den Verbindungsplatten erlauben, insbesondere für Temperatursensoren und Balancerverbindungen.

Eine Überwachungseinrichtung kann vorgesehen sein, welche die von den Sensoren (z.B. Temperatursensoren sowie Sensoren zur Überwachung von Strom und/oder Spannung) aufgenommenen Sensordaten ermittelt und insbesondere auswertet. Eine Überwachungseinrichtung kann in der Anordnung integriert sein (z.B. innerhalb des Gehäuses der Anordnung) oder extern vorgesehen sein, wobei die Anordnung beispielsweise eine Schnittstelle zur Überwachungseinrichtung bereitstellt.

Verbindungen und Kontaktierungen zwischen den Bauelementen, einer Überwachungseinrichtung und/oder Verbindungsplatten können prinzipiell in der Wire-To-Wire-, Wire-to-Board- und/oder Board-to-Board-Technologie ausgeführt sein. Beispielsweise ist die Überwachungseinrichtung als Platinenanordnung ausgestaltet, welche mit einer der genannten Techniken mit der Verbindungsplatte und/oder Sensoren verbunden ist.

Weitere mögliche Ausgestaltungen von kombinierten Verbindungsplatten sind Zusammenstellungen von Leiterplatten mit flexiblen Elementen und/oder flexiblen Verbindungsplattenabschnitten. Beispiele hierfür sind Starrflex-Leiterplatten sowie Flex-Leiterplatten ("D-Leiterplatte"). Solche kombinierten (teil-)flexiblen Verbindungsplatten können einerseits starre Verbindungsplattenabschnitte aufweisen, welche zum Kontakt der Zellen über die Kontaktelemente dienen. Andererseits können Verbindungsplattenabschnitte, beispielsweise zur Anordnung von Sensorelementen, Balancerverbindungen und/oder zur Ableitung/Zuleitung des Stroms der Zellen über flexible Abschnitte mit den starren Verbindungsplattenabschnitten verbunden und winklig angeordnet werden, so dass eine besonders kompakte Bauform der Anordnung erhalten wird.

Mindestens ein Temperatursensor kann auf der Verbindungsplatte angeordnet sein. Vorzugsweise wird auch mindestens ein Temperatursensor am umfangsseitigen Bereich mindestens einer Zelle und insbesondere in Axialrichtung mittig angeordnet, um die Temperatur der jeweiligen Zelle genauer zu ermitteln. Der mindestens eine am umfangsseitigen Bereich angeordnete Temperatursensor kann hierbei über Anschlussdrähte entsprechender Länge mit der Verbindungsplatte verbunden sein oder beispielsweise über kombinierte Verbindungsplatten wie Combi-Board-Leiterplatten, Starrflex-Leiterplatten, Flex-Leiterplatten, welche beispielsweise winklig angeordnet sind. Dabei ist es möglich, dass eine Leiterplatte zur Positionierung des Temperatursensors winklig zur Verbindungsplatte angeordnet ist und z.B. über Steckverbinder (Board-to-Board) kontaktiert wird.

Da die Federkontaktelemente trotz Maßabweichungen der einzelnen Zellen eine in Bezug auf die Position der Verbindungsplatte(n) besonders maßhaltige Anordnung erlauben, können auf diese Weise auch Bauelemente und insbesondere Temperatursensoren am umfangsseitigen Bereich von Zellen zuverlässig positioniert werden.

Die mindestens zwei Zellen sind an der mindestens einen Verbindungsplatte angeordnet, insbesondere mit der Axialrichtung der Zellen (im Wesentlichen) entlang einer Normalen der Verbindungsplatte. Die Stirnseiten und Polbereiche der Zellen sind somit den Verbindungsplatten zugewandt. Sind mehrere Verbindungsplatten vorgesehen, verlaufen die Verbindungsplatten insbesondere (im Wesentlichen) parallel zueinander und die Zellen können zwischen den Verbindungsplatten angeordnet sein.

Kontaktelemente sind zwischen der mindestens einen Verbindungsplatte und den Polbereichen der mindestens zwei Zellen für einen elektrischen Kontakt vorgesehen. Die Kontaktelemente sind hierbei insbesondere auf einer elektrisch (und thermisch) leitfähigen Schicht der Verbindungsplatte angeordnet, z.B. auf einer einfachen Platte aus einem leitfähigen Material oder einer leitfähigen Schicht eines Schichtverbundmaterials, wodurch die elektrisch (und thermisch) leitfähige Schicht der Verbindungsplatte mit dem Polbereich der Zelle in elektrischen Kontakt tritt. Ist auf der Verbindungsplatte außen eine isolierende Schicht angeordnet, kann die isolierende Schicht an der Position der Kontaktelemente unterbrochen sein, um einen elektrischen Kontakt zwischen Kontaktelement und leitfähiger Schicht zu erlauben.

Wie bereits oben erläutert, wird das Versagen einzelner Zellen auf den im Stand der Technik durch Maßabweichungen entstehenden hohen Druck auf den Polbereichen zurückgeführt, welche an die empfindlichen Elektrodenbereiche im Inneren der Zelle angrenzen können. Durch die Verwendung der Federkontaktelemente kann ein übermäßiger Druck auf die Polbereiche vermieden werden, was insbesondere dadurch verbessert wird, dass in einer Ausgestaltung der Anordnung gemäß der ersten Lehre die Polbereiche mit der jeweiligen Verbindungsplatte nur über Anlage zu den Kontaktelementen in Berührung stehen. Hierdurch wird auch bei einer äußeren Belastung der Verbindungsplatten mit Kräften, Vibrationen und mechanischen Spannungen sowie Stoßbelastungen der Polbereich der Zellen durch eine Einfederung der Federkontaktelemente entlastet. Durch die federnden Eigenschaften der Federkontaktelemente wird auch bei einem Auseinanderziehen der Verbindungsplatten (z.B. eine Zuglast auf der Anordnung in Axialrichtung) ein elektrischer Kontakt gewährleistet.

In einer Ausgestaltung der Anordnung gemäß der ersten Lehre werden die mindestens zwei Zellen in Axialrichtung über eine Haltekraft mit der mindestens einen Verbindungsplatte gehalten. Ein Halten der Zellen über eine Haltekraft ist insbesondere gegenüber einer unlösbaren Verbindung der Zellen mit der mindestens einen Verbindungsplatte vorteilhaft, da das Risiko für eine Beeinträchtigung der Zelle durch die Verbindung verringert wird.

In einer nächsten Ausgestaltung der Anordnung gemäß der ersten Lehre ist mindestens ein Halteelement benachbart zu der mindestens einen Verbindungsplatte vorgesehen, wobei das mindestens eine Halteelement mindestens eine der mindestens zwei Zellen in Axialrichtung positioniert. Das mindestens eine Halteelement kann hierbei die mechanische Fixierung der Zelle zumindest in Axialrichtung bewirken, wobei eine mechanische Überlastung der Polbereiche durch eine zu starke Federkraft des Federkontaktelements unterbunden werden kann.

Insbesondere positioniert das mindestens eine Haltelement die Zelle über einen Formschluss in Axialrichtung.

Positioniert gemäß einer weiteren Ausgestaltung der Anordnung das mindestens eine Halteelement die Zellen über Anlage an einem Randbereich am Übergang zwischen dem umfangsseitigen Bereich und der jeweiligen Stirnseite in Axialrichtung, werden die bei der Positionierung (insbesondere einem Formschluss) anfallenden Kräfte auf die Zelle vorteilhafterweise nicht oder nur im geringen Maße auf die empfindlicheren Polbereiche ausgeübt. Insbesondere bei Rundzellen wird durch eine Anlage am Randbereich erreicht, dass die bei der Positionierung anfallenden Kräfte auf dem umfangsseitigen Bereich bzw. dem Gehäuse der Zelle lasten und nicht auf den Polbereichen. Gleichzeitig kann die Maßabweichung für die Längenausdehnung der Randbereiche (z.B. dem Gehäuse der Zelle) geringer sein als für die Längenausdehnung der Polbereiche. Dann kann über eine Anlage der Randbereiche eine genauere Positionierung der Zelle erreicht werden, wobei größere Maßabweichungen des Polbereichs über das Federkontaktelement ausgeglichen werden.

In einer weiteren Ausgestaltung der Anordnung ist eine Federkonstante des Federkontaktelements vorgegeben, welche zumindest abhängig ist von: der Höhe des Federkontaktelements im entspannten Zustand relativ zur Verbindungsplatte und der Höhe des Halteelements relativ zur Verbindungsplatte. Die Höhe des Halteelements kann als Begrenzung für die Position der Zelle in Axialrichtung dienen. Insbesondere über die Differenz der Höhe des Federkontaktelements im entspannten Zustand relativ zur Verbindungsplatte und der Höhe des Halteelements relativ zur Verbindungsplatte kann eine maximale Einfederung des Federkontaktelements ermittelt werden. Die Federkonstante kann somit derart bestimmt werden, dass eine Maximalkraft nicht überschritten wird, welche indikativ für eine mechanische Überlastung des Polbereichs der Zelle ist.

Die Federkonstante des Federkontaktelements kann zumindest vorgegeben sein abhängig von: einer Höhendifferenz des Polbereichs in Axialrichtung relativ zum Randbereich. Eine Höhendifferenz kann hierbei beispielsweise durch einen erhöhten Polbereich (etwa in Form eines Poldeckels) oder einer Einbuchtung des Polbereichs gegeben sein. Liegt der Randbereich, aber nicht der Polbereich am Halteelement an, kann sich durch diese Höhendifferenz eine zusätzliche Einfederung des Federkontaktelements ergeben. Mit der Höhendifferenz kann auch eine Maßabweichung bzw. Variation der Höhendifferenz des Polbereichs in Axialrichtung relativ zum Randbereich berücksichtigt werden.

In einer weiteren Ausgestaltung der Anordnung sind an dem mindestens einen Halteelement Kraftschlussmittel vorgesehen, welche mindestens eine der Zellen über einen Kraftschluss halten. Das Halten über einen Kraftschluss erhöht die Stabilität der Anordnung.

Die Kraftschlussmittel können in einer Ausgestaltung ein elastisches Material umfassen oder hieraus bestehen. Hiermit kann auch für Maßabweichungen des Randbereichs der Zellen eine Kraftentlastung bereitgestellt werden, um z.B. eine Überlastung des Gehäuses der Zelle zu vermeiden. Wenn dem Federkontaktelement und den Kraftschlussmitteln jeweils eine Federkonstante zugeordnet werden kann, ist insbesondere die Federkonstante der Kraftschlussmittel größer (z.B. mindestens eine Größenordnung größer) als die Federkonstante der Federkontaktelemente. Die Kraftschlussmittel können weiter eine adhäsive Wirkung haben, womit die Stabilität der Anordnung erhöht werden kann und auch die Montage erleichtert wird, da die Zellen beim Herstellen der Anordnung auf den Kraftschlussmitteln fixiert werden können. Beispielsweise kann als Kraftschlussmittel ein Klebeband auf Polymerbasis, insbesondere ein Schaumkern-Klebeband verwendet werden, etwa Acrylat(schaum)klebeband und/oder Polyethylen(schaum)klebeband. Entsprechende Klebebänder können auch den Erfordernissen bei der Verwendung im Automobilbereich genügen.

In einer nächsten Ausgestaltung der Anordnung sind mindestens zwei Verbindungsplatten und mindestens ein Druckelement vorgesehen, wobei das Druckelement die mindestens zwei Verbindungsplatten mit einem vorgegebenen Abstand hält. Das mindestens eine Druckelement kann beispielsweise an der Kante der Verbindungsplatten angeordnet sein und beispielsweise an der Außenseite der Anordnung. Alternativ oder zusätzlich kann auch mindestens ein Druckelement im Inneren der Anordnung vorgesehen sein, beispielsweise ein Druckelement wie ein Gewindestab, welcher näherungsweise parallel zur Axialrichtung der Zellen verläuft und zwischen senkrecht zur Axialrichtung benachbarten Zellen angeordnet ist.

Durch das Halten der Verbindungsplatten auf einem vorgegebenen Abstand wird erreicht, dass die Zellen mit einer vorgegebenen Längsausdehnung eine definierte Einfederung der Federkontaktelemente bewirken. Zudem bilden die Verbindungsplatten mit den zwischenliegend angeordneten Zellen eine Baueinheit bzw. einen modularen Aufbau, welcher auf einfache Weise durch hinzufügen weiterer Baueinheiten erweitert werden kann. Hiermit wird die Herstellung vereinfacht, da solche Bauelemente vorgefertigt und entsprechend der Anforderungen an die jeweilige Anordnung (beispielsweise der Kapazität und/oder Spannung der Anordnung) kombiniert werden können. Der vorgegebene Abstand wird beispielsweise vorgegeben abhängig von der Nennlänge der Zellen in Axialrichtung, der Höhe der Federkontaktelemente relativ zur Verbindungsplatte und/oder der Höhe der Halteelemente relativ zur Verbindungsplatte. Der vorgegebene Abstand wird insbesondere so gewählt, dass durch das Federkontaktelement einerseits eine sichere Anlage an den Polbereich bewirkt wird, und andererseits die Federkraft unterhalb einer Maximalkraft begrenzt wird, welche indikativ für eine mechanische Überlastung des Polbereichs der Zelle ist.

In einer nächsten Ausgestaltung der Anordnung ist mindestens eine Balancerverbindung vorgesehen. Über mindestens eine Balancerverbindung können Zellen beim Laden und/oder Entladen näherungsweise auf die gleiche Spannung gebracht werden. Beispielsweise wird ein Spannungsausgleich von Zellen aus verschiedenen, miteinander verbundenen Anordnungen bewirkt. Spannungsunterschiede können beispielsweise entstehen durch die Eigenschaften einzelner Zellen, beispielsweise unterschiedliche Kapazitäten, Impedanzen oder Alterungszustände.

Dadurch, dass die Zellen über Federkontaktelemente mit den Verbindungsplatten kontaktiert werden, werden insbesondere die mindestens zwei Verbindungsplatten mit mindestens einem Druckelement auf einem festen, vorgegebenen Abstand gehalten, wobei das Risiko für eine Beeinträchtigung der Zellen aufgrund von Maßabweichungen vermindert wird. Durch den vorgegebenen Abstand können auch die Balancerverbindungen einfach ausgestaltet werden. Aufgrund der hohen Maßgenauigkeit können Balancerverbindungen beispielsweise als Leiterplatte mit Verbindern (z.B. als Board-to-Board oder Wire-to-Board-Verbindern) mit den Verbindungsplatten in Kontakt gebracht werden, wodurch die Herstellung der Anordnung vereinfacht wird. Ebenso denkbar sind Balancerverbindungen in Form von Verbindungsdrähten oder Kabeln, z.B. mit Wire-to-Wire oder Wire-to-Board-Verbindungen zur Verbindungsplatte.

Der mindestens einen Balancerverbindung kann ein Sicherungselement zugeordnet sein. Wird beispielsweise kann im Crashfall oder bei Stoßbelastungen die Balancerverbindung in ungewollten Kontakt zu weiteren Elementen der Anordnung kommen (beispielsweise zu einer elektrisch leitfähigen Schicht mit einem anderen Potential). Hiermit besteht die Gefahr eines Kurzschlusses, was durch die Sicherungselemente unterbunden werden kann. Mögliche Ausgestaltungen der Sicherungselemente umfassen eine Querschnittsverjüngung einer Leiterbahn auf der Verbindungsplatte, Schmelzsicherungen, Bond-Drahtsicherungen, Kaltleitern auf Keramikbasis und/oder Polymerbasis und/oder elektronische Sicherungen (etwa auf Halbleiterbasis wie Transistoren).

In einer nächsten Ausgestaltung der Anordnung sind mehrere in Axialrichtung benachbart angeordnete Zellen vorgesehen, wobei die in Axialrichtung benachbart angeordneten Zellen jeweils zwischen im vorgegebenen Abstand gehaltenen Verbindungsplatten angeordnet sind. Neben dem modularen Aufbau kann über ein Vorgeben des Abstands für jede Lage von Zellen in Axialrichtung erreicht werden, dass sich Maßabweichungen der Zellen in Axialrichtung nicht die nächste Lage von Zellen in Axialrichtung beeinflussen.

In einer alternativen Ausgestaltung kann der Abstand von außenliegenden Verbindungsplatten in einer Anordnung festgelegt werden. Hierfür ist die Ausgestaltung mit Federkontaktelementen vorteilhaft, da auch bei mehreren Zellen mit hoher Maßabweichung, welche in Axialrichtung benachbart angeordnet sind (also in der gleichen "Säule" von Zellen), eine mechanische Überlastung vermieden werden kann.

In einer Ausgestaltung der Anordnung gemäß der ersten Lehre werden die Zellen in Axialrichtung über eine Haltekraft zwischen den Verbindungsplatten gehalten, wobei die Haltekraft in Abhängigkeit einer Überlastkraft der Zellen gewählt wird. Eine entsprechende Haltekraft kann eine hohe mechanische Stabilität der Anordnung bewirken, wobei jedoch gleichzeitig über den Kontakt mittels Federkontaktelementen vermieden wird, dass ein zu hoher Druck auf den Polbereichen einzelner Zellen lastet, welche eine Maßabweichung in Axialrichtung aufweisen. Die Überlastkraft kann beispielsweise eine Vorgabe für eine maximale Kraft sein, welche auf dem Zellgehäuse lasten darf. Insbesondere in Kombination mit der Verwendung der zuvor beschriebenen Halteelemente kann die Haltekraft in Abhängigkeit einer Überlastkraft für den Randbereich der Zelle bzw. das Zellgehäuse gewählt werden. Die Haltekraft kann somit für die Verspannung ebenfalls hoch eingestellt werden, ohne die Zellen mechanisch zu überlasten. Insbesondere kann die Haltekraft höchstens 50 %, insbesondere höchstens 75 % der Überlastkraft betragen.

In einer weiteren Ausgestaltung der Anordnung gemäß der ersten Lehre ist mindestens ein Halterungselement zum Halten der Zellen senkrecht zur Axialrichtung vorgesehen. Beispielsweise werden die Zellen senkrecht zur Axialrichtung durch einen Formschluss gehalten. Hierbei kann eine Platte mit Ausnehmungen in Form des Querschnitts der Zellen vorgesehen sein, deren Maße näherungsweise (unter Berücksichtigung der Maßabweichung bzw. Toleranz) den Maßen des Querschnitts der Zelle entsprechen. Für Rundzellen können runde Bohrungen in einer Platte als Halterungselement vorgesehen sein. Das mindestens eine Halterungselement kann insbesondere einstückig mit dem mindestens einem Halteelement einer Verbindungsplatte ausgeführt werden, beispielsweise als Platte mit Ausnehmungen zur formschlüssigen Aufnahme der Zellen.

In einer weiteren Ausgestaltung der Anordnung gemäß der ersten Lehre sind die Kontaktelemente bzw. Federkontaktelemente vorzugsweise einteilig mit einem Halteelement und/oder einem Halterungselement ausgebildet und insbesondere als von der Verbindungsplatte separates Kontaktelement bzw. Federkontaktelement ausgebildet. Beispielsweise wird ein Halteelement und/oder ein Halterungselement aus Kunststoff im Spritzguss hergestellt und die metallische Kontaktelemente mit der Herstellung integriert. Hierdurch wird die Montage erleichtert, da die einteiligen Kontaktelemente und Halteelemente/Halterungselemente gemeinsam auf die Verbindungsplatte aufgelegt werden können. Durch die einteilige Ausführung werden die Kontaktelemente auf einfache Weise auf der Verbindungsplatte positioniert, wobei eine weitere Befestigung der Kontaktelemente auf der Verbindungsplatte entfallen kann.

Prinzipiell können die Kontaktelemente auch nichtmetallische Komponenten aufweisen, beispielsweise eine teilweise Kunststoffumspritzung. Die Federkontaktelemente sind in einer anderen Ausgestaltung der Anordnung aus einem metallischen Material ausgebildet und insbesondere frei von Kunststoffen.

Die Federkontaktelemente können aus Stahl (insbesondere Federstahl wie rostfreier Federstahl) vorgesehen sein. Vorzugsweise sind die Federkontaktelemente aus einem kupferhaltigen Material, beispielsweise Kupfer oder einer Kupferlegierung ausgebildet, wodurch insbesondere im Vergleich zum Federstahl eine verbesserte thermische und elektrische Leitfähigkeit bereitgestellt werden kann, wobei gleichzeitig die vorteilhaften Federeigenschaften beibehalten werden. Im Hinblick auf die Eigenschaften haben sich insbesondere Federkontaktelemente aus Kupfer-Beryllium-Legierungen als vorteilhaft herausgestellt. Kupfer-Beryllium-Legierungen können hierbei insbesondere einem Be-Gehalt von höchstens 2 Gew.-% aufweisen. Kupfer-Nickel-Beryllium-Legierungen und Kupfer-Kobalt-Beryllium-Legierungen sind ebenfalls möglich. Alternativ können auch Kupferlegierungen ohne wesentliche Berylliumanteile verwendet werden, z.B. Kupfer-Zinn-Legierungen (Bronze), Kupfer-Zink-Legierungen (Messing), Kupfer-Nickel-Zink-Legierungen (Neusilber), Kupfer-Chrom-Titan-Silizium-Legierungen und/oder Kupfer-Titan-Legierungen. Ebenfalls denkbar sind Nickel und Nickellegierungen, beispielsweise Nickel-Beryllium-Legierung oder weitere Legierungstypen wie Eisen-Kobalt-Nickel-Legierungen.

Das Federkontaktelement kann prinzipiell einen einzelnen Kontaktbereich aufweisen, welcher in Anlage zu dem jeweiligen Pol zur Bildung des elektrischen Kontakts steht. In einer weiteren Ausgestaltung der Anordnung gemäß der ersten Lehre weist das Federkontaktelement mehrere Kontaktbereiche auf, insbesondere zwei, vier, sechs oder acht Kontaktbereiche, welche in Anlage zu dem jeweiligen Pol zur Bildung des elektrischen Kontakts stehen können. Mit mehreren Kontaktbereichen kann eine sichere Anlage mittels Federkraft bewirkt werden, auch wenn Maßabweichungen der Polbereiche vorliegen, beispielsweise wenn die Polbereiche einer Zelle nicht genau oder nicht vollständig parallel zueinander stehen. Durch mehrere Kontaktbereiche wird ein sicherer elektrischer Kontakt über die Federkraft ermöglicht, da durch die Kontaktbereiche mehrere Kontaktfinger ausgebildet werden, welche auch Unregelmäßigkeiten der Polbereiche ausgleichen können. Zudem wird auch ein verbesserter Wärmekontakt gewährleistet. Gleichzeitig kann auf eine stoffschlüssige Verbindung wie ein Löten oder Verschweißen der Kontaktbereiche verzichtet werden.

Beispiele für eine Ausbildung des Federkontaktelements sind Druckfedern, insbesondere Flachfedern, Formfedern, Blattfedern, Flachformfedern, Tellerfedern. Vorzugsweise ist das Federkontaktelement als gebogenes Stanzteil ausgebildet, welches insbesondere aus einem Metallblech hergestellt werden kann. Das Federkontaktelement kann somit auf einfache Weise mit einem geeigneten Kontaktbereich ausgebildet werden. Alternativ kann das Federkontaktelement als geschnittenes Bauteil (durch Laserschnitt oder Wasserstrahlschnitt) oder geätztes Bauteil ausgebildet sein. Beispielsweise ist das Federkontaktelement als Formfeder ausgebildet. Das Federkontaktelement kann weiter einen Befestigungsbereich zur Befestigung und Kontaktierung mit der Verbindungsplatte sowie einen Federbereich aufweisen, welcher als federndes Gelenk zwischen Befestigungsbereich und Kontaktbereich ausgestaltet ist.

In einer Ausgestaltung der Anordnung ist mindestens eines der Kontaktelemente mit einer Kontaktbeschichtung ausgebildet. Damit wird die Korrosionsanfälligkeit weiter reduziert und die Beeinträchtigung des Polbereichs der Zelle und des Kontaktelements durch Umgebungseinflüsse, etwa durch elektrochemische Prozesse unter korrosiven Bedingungen vermindert. Beispielsweise ist als Material für die Kontaktbeschichtung eine Beschichtung auf Basis von Edelmetall vorgesehen, insbesondere Gold und/oder Silber. (Hart-)Gold ist widerstandsfähig gegen Reibung, was insbesondere für einen kraftschlüssigen Kontakt vorteilhaft ist. Gold weist zudem eine hohe elektrische Leitfähigkeit auf, ist sehr gut lötfähig und duktil, so dass Goldbeschichtungen für die Federkontaktelemente geeignet sind. Ebenso möglich sind Kontaktbeschichtungen mit Zinn oder Nickel.

Die Kontaktbeschichtung kann auch einen mehrschichtigen Aufbau wie eine Duplexbeschichtung aufweisen, beispielsweise eine Nickelschicht mit einer darauf angeordneten Edelmetallschicht. Verschiedene Schichtkombinationen und Schichtdicken sind denkbar. In einem Beispiel kann das Kontaktelement (insbesondere galvanisch) mit einer Nickelschicht mit einer Schichtdicke von 1 µm bis 4 µm, insbesondere 2 µm bis 3 µm beschichtet sein. Nickel kann als Diffusionsbarriere fungieren. Auf der Nickelschicht kann eine Edelmetallschicht, insbesondere eine (Hart-)Goldschicht insbesondere galvanisch aufgebracht sein, wobei die Schichtdicke beispielsweise 0,1 µm bis 2,0 µm beträgt. Wird eine Schichtdicke für die Edelmetallschicht von größer 0,1 µm, insbesondere größer 0,6 µm oder 0,7 µm gewählt, kann die Porosität der Edelmetallschicht verringert werden, um die Korrosionsbeständigkeit zu verbessern. Mit Schichtdicken unterhalb 2,0 µm, insbesondere unterhalb 1,5 µm kann gleichzeitig Material eingespart werden. Ebenso können Schichten aus Nickel, Palladium und Gold aufeinander angeordnet werden. Durch die Verwendung von Palladium kann die Schichtdicke für die (Hart-) Goldschicht weiter reduziert werden, um Material einzusparen, wobei der Kontakt über die Goldschicht bewirkt wird. Ebenso möglich sind Beschichtungen auf Basis von Zink oder bestehend aus Zink, insbesondere wenn ein Verschweißen des Kontaktelements vorgesehen ist.

Die zuvor genannten Beschichtungen können mit einer oder mehreren Passivierungsschichten kombiniert sein. Eine Passivierungsschicht kann elektrisch leitfähig sein und das Abriebverhalten von Kontakten verbessern. Zudem kann eine Passivierungsschicht schmutzabweisend und/oder wasserabweisend sein und insbesondere das Korrosionsverhalten verbessern. Prinzipiell kann eine Passivierungsschicht Verbindungen mit funktionellen Gruppen aufweisen, welche durch Bindung auf der (Metall-) Oberfläche eine chemisch funktionelle Oberfläche bilden können. Ein Beispiel hierfür ist insbesondere für Gold- und Silberoberflächen Thiole. Für das Kontaktelement kann eine Gesamtbeschichtung oder auch eine selektive Beschichtung vorgesehen sein, wobei beispielsweise Teile des Kontaktelements unbeschichtet sind oder verschiedene Beschichtungen aufweisen.

In einer Ausgestaltung der Anordnung ist mindestens eines der Kontaktelemente mit einer Kontaktbeschichtung ausgebildet, dessen Standardpotential in der elektrochemischen Spannungsreihe weniger als 1 V vom Standardpotential des Materials des Polbereichs abweicht. Damit wird ebenfalls die Korrosionsanfälligkeit weiter reduziert und die Beeinträchtigung der Zelle durch Umgebungseinflüsse vermindert.

Die Anordnung kann in einer Ausgestaltung mindestens ein Anschlusselement aufweisen, welches dem Kontaktieren der gesamten Anordnung zum Laden und/oder Entladen dient. Beispielsweise ist an mindestens einer Verbindungsplatte ein Leistungsanschlusselement angeordnet, welches insbesondere über SMT, THT und/oder Einpresstechnik mit der Verbindungplatte verbunden ist.

Das mindestens eine Anschlusselement kann beispielsweise einen Anschluss für ein Anschlussmittel wie ein Anschlusskabel, mindestens eine Stromschiene, insbesondere mindestens eine laminierte Stromschiene, mindestens ein Stromband, insbesondere mindestens ein laminiertes Stromband, Dehnungsband, Flechtband, Flachgewebeband, Metallseil (z.B. Kupferseil) bereitstellen, welche mit oder ohne Isolation ausgestaltet sein können. Der Anschluss wird z.B. über eine Steckverbindung, Schraubverbindung, stoffschlüssige Verbindung oder Klemmverbindung bewirkt.

Zum Anschluss ist beispielsweise an mindestens einem Endbereich der Anordnung eine (äußere) Verbindungsplatte vorgesehen, welche beidseitig eine leitfähige Schicht aufweist. Die den Zellen zugewandte leitfähige Schicht steht mit den jeweiligen Zellen über Kontaktelemente in Kontakt. Die den Zellen abgewandte leitfähige Schicht ist mit der den Zellen zugewandten leitfähigen Schicht beispielsweise über mindestens eine Durchkontaktierung verbunden. Die den Zellen abgewandte leitfähige Schicht kann eine Kontaktierung zu einem Anschlusselement aufweisen.

In einer Ausgestaltung sind mehrere Anschlusselemente vorgesehen. Über eine Mehrzahl von Anschlusselementen kann eine möglichst homogene Stromverteilung bewirkt werden, so dass die Kontaktelemente einzelner Zellen beispielsweise einen möglichst gleichen Abstand zu Anschlusselementen aufweisen. Mehrere Anschlusselemente können beispielsweise auf einer zuvor beschriebenen (äußeren) Verbindungsplatte an einem Endbereich der Anordnung vorgesehen sein und insbesondere über SMT, THT und/oder Einpresstechnik mit der Verbindungsplatte verbunden sein.

Ebenso kann über eine (äußere) Verbindungsplatte ein flächiger Kontakt auch ohne Anschlusselemente bewirkt werden, z.B. indem eine Stromschiene mit einer Fläche auf der leitfähigen (äußeren) Schicht der Verbindungsplatte anliegt. Hierzu kann beispielsweise eine stoffschlüssige Verbindung vorgesehen sein.

Gemäß einer zweiten Lehre wird zur Lösung der oben genannten Aufgabe ein Verfahren zur Herstellung einer Anordnung angegeben, bei dem mindestens zwei Zellen an mindestens einer Verbindungsplatte angeordnet werden, wobei die mindestens zwei Zellen jeweils eine Axialrichtung, einen umfangsseitigen Bereich und zwei Stirnseiten aufweisen, wobei die Stirnseiten einander in Axialrichtung gegenüber liegend angeordnet sind und mindestens ein Polbereich an einer Stirnseite vorgesehen ist, wobei über Kontaktelemente zwischen der mindestens einen Verbindungsplatte und den Polbereichen der mindestens zwei Zellen ein elektrischen Kontakt bewirkt wird, und bei dem mindestens ein Federkontaktelement als Kontaktelement verwendet wird, welches in einen verformten Zustand gebracht wird, so dass eine Federkraft zur Anlage an dem jeweiligen Polbereich der mindestens zwei Zellen zur Bildung des elektrischen Kontakts zwischen der mindestens einen Verbindungsplatte und Polbereich bereitgestellt wird. Das Verfahren ist insbesondere zur Herstellung einer Anordnung gemäß der ersten Lehre vorgesehen.

Gemäß einer dritten Lehre wird zur Lösung der oben genannten Aufgabe eine Verwendung eines Federkontaktelements in einer Anordnung angegeben, mit mindestens zwei Zellen, wobei die mindestens zwei Zellen jeweils eine Axialrichtung, einen umfangsseitigen Bereich und zwei Stirnseiten aufweisen, wobei die Stirnseiten einander in Axialrichtung gegenüber liegend angeordnet sind und mindestens ein Polbereich an einer Stirnseite vorgesehen ist, mit mindestens einer Verbindungsplatte, wobei die mindestens zwei Zellen an der mindestens einen Verbindungsplatte angeordnet sind, wobei Kontaktelemente zwischen der mindestens einen Verbindungsplatte und den Polbereichen der mindestens zwei Zellen für einen elektrischen Kontakt vorgesehen sind.

Das Federkontaktelement bzw. die Anordnung gemäß der ersten Lehre wird vorzugsweise in der Elektromobilität, beispielsweise in elektrisch betriebenen Fahrzeugen, und der Energiewirtschaft verwendet. Denkbar ist ebenfalls die Verwendung in mobilen Ladestationen oder (mobilen) Energieversorgungseinrichtungen.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Lehren offenbart verstanden werden. Insbesondere soll durch die Offenbarung von Mitteln und/oder Elementen der Anordnung auch der entsprechende Verfahrensschritt zur Herstellung und die Verwendung offenbart sein.

Weitere Ausgestaltungen und Vorteile der Erfindung sind in der folgenden detaillierten Beschreibung einiger beispielhafter Ausführungsformen der vorliegenden Erfindung, insbesondere in Verbindung mit der Zeichnung, zu entnehmen. Die Zeichnung zeigt in
- Fig. 1: eine schematische Ansicht eines Ausführungsbeispiels einer Anordnung 2 gemäß der ersten Lehre,
- Fig. 2a-c: Detailansichten des Ausführungsbeispiels der Anordnung 2 aus Fig. 1,
- Fig. 3: eine schematische Ansicht eines weiteren Ausführungsbeispiels einer Anordnung 2 gemäß der ersten Lehre,
- Fig. 4: eine schematische Ansicht eines weiteren Ausführungsbeispiels einer Anordnung 2 gemäß der ersten Lehre in einer perspektivischen Darstellung und
- Fig. 5: eine schematische Ansicht eines weiteren Ausführungsbeispiels einer Anordnung 2 gemäß der ersten Lehre in einer perspektivischen Darstellung.

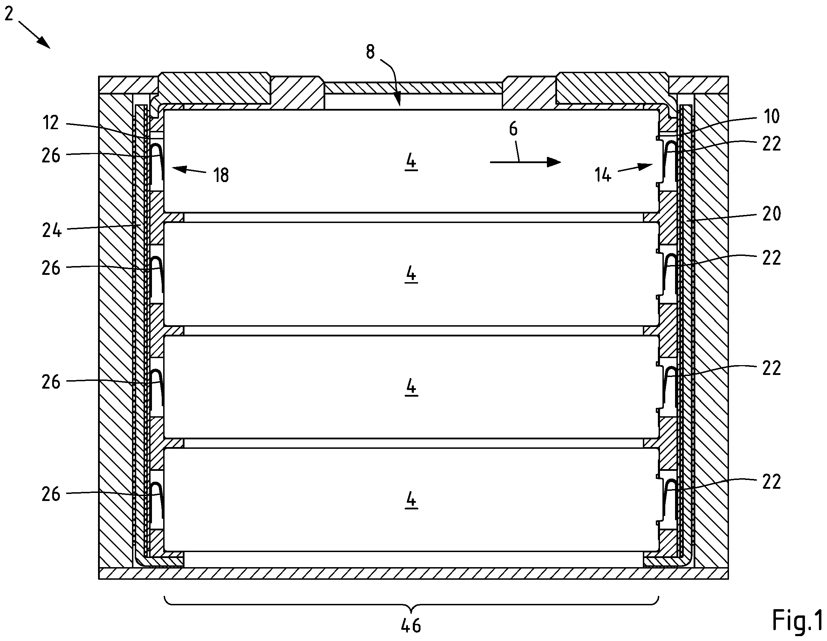

In Fig. 1 ist eine schematische Ansicht eines Ausführungsbeispiels einer Anordnung 2 gemäß der ersten Lehre gezeigt. Die Anordnung 2 ist für Zellen 4 zur Speicherung elektrischer Energie ausgestaltet. Mindestens zwei Zellen 4 sind vorgesehen, welche als Rundzellen des Typs 18650 ausgeführt sind. Die mindestens zwei Zellen 4 weisen eine Axialrichtung 6 auf, welche im Wesentlichen der zylindrischen Achse der Rundzelle entspricht. Die Zellen 4 weisen einen umfangsseitigen Bereich 8 auf, welcher im Wesentlichen dem Zylindermantel der Rundzelle entspricht. Weiter weisen die Zellen 4 jeweils zwei Stirnseiten 10, 12 auf, welche einander in Axialrichtung 6 gegenüber liegend angeordnet sind. An der Stirnseite 10 ist ein Polbereich 14 vorgesehen, welcher dem positiven Pol der jeweiligen Zelle 4 zuzuordnen ist. Auf der gegenüber liegenden Stirnseite 12 ist ein Polbereich 18 vorgesehen, welcher dem negativen Pol der jeweiligen Zelle 4 zuzuordnen ist.

Eine Verbindungsplatte 20 ist vorgesehen, wobei die Zellen 4 an der Verbindungsplatte 20 angeordnet sind. Zwischen der Verbindungsplatte 20 und dem jeweiligen Polbereich 14 der Zellen 4 sind weiter Kontaktelemente 22 für einen elektrischen Kontakt vorgesehen, wobei die Kontaktelemente 22 den positiven Pol über den Polbereich 14 mit einer elektrisch leitfähigen Schicht der Verbindungsplatte 20 kontaktiert.

In Fig. 1 ist hierbei ein Ausführungsbeispiel mit einer weiteren Verbindungsplatte 24 gezeigt, wobei Kontaktelemente 26 zwischen der Verbindungsplatte 24 und dem Polbereich 18 der Zellen 4, welcher dem negativen Pol zugeordnet ist, für einen elektrischen Kontakt vorgesehen sind. Die Kontaktelemente 26 sind in der Fig. 1 ebenfalls als Federkontaktelemente dargestellt. Alternativ können die Kontaktelemente 26 jedoch auch als starres Kontaktelement (d.h. ohne wesentliche federnde Eigenschaften) ausgebildet sein. In einer weiteren Alternative sind keine Kontaktelemente 26 auf der weiteren Verbindungsplatte 24 vorgesehen und der Polbereich 18 der Zelle 4 steht in direkten Kontakt zur weiteren Verbindungsplatte 24.

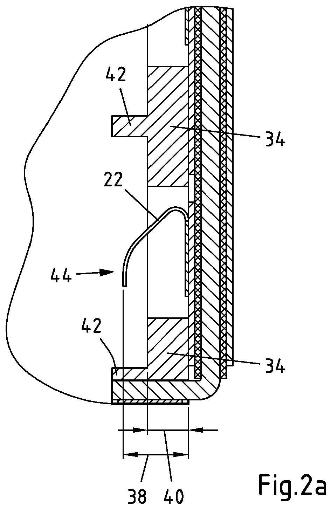

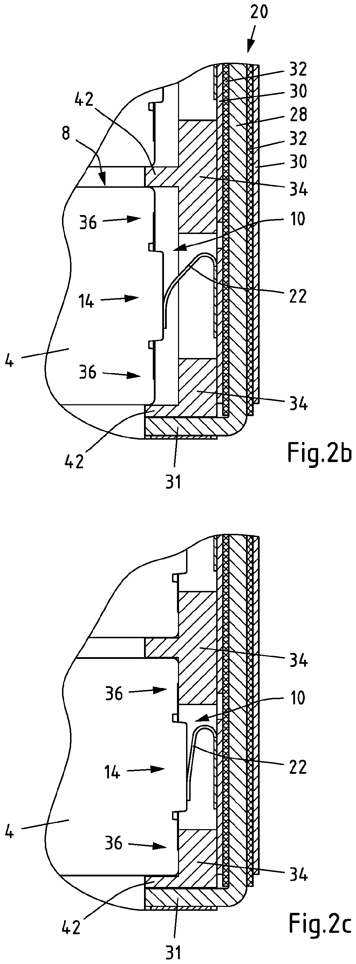

Die Kontaktelemente 22 sind als Federkontaktelemente ausgestaltet, was weiter aus den Detailansichten des Ausführungsbeispiels der Anordnung 2 in den Fig. 2a-c hervorgeht. In der Fig. 2a ist eine Anordnung ohne eingesetzte Zellen gezeigt. Fig. 2b und 2c zeigen die Anordnung mit eingesetzten Zellen 4, wobei zwei verschiedene Situationen wiedergegeben sind.

Durch die Positionierung der Zellen 4 werden die Kontaktelemente 22 aus einem entspannten Zustand (vgl. Fig. 2a) in einen verformten Zustand (vgl. Fig. 2b und 2c) gebracht, wobei die Kontaktelemente 22 eine Federkraft zur Anlage an dem jeweiligen Polbereich 14 der Zellen 4 zur Bildung des elektrischen Kontakts zwischen der Verbindungsplatte 20 und Polbereich 14 bereitstellt.

Durch die Ausgestaltung als Federkontaktelement wird erreicht, dass sich das Kontaktelement 22 bei einem Kontaktieren mit der jeweiligen Zelle 4 auch bei verschiedenen Längenausdehnungen der Zelle 4 in Axialrichtung 6 federnd verformen kann. Die Federkraft bzw. die Federkonstante ist derart bemessen, dass einerseits eine sichere Anlage und damit ein sicherer elektrischer Kontakt zwischen Verbindungsplatte 20 und Polbereich 14 bewirkt wird, welcher auch bei mechanischen Belastungen wie Erschütterungen und Vibrationen im Wesentlichen beibehalten wird. Andererseits ist die Federkraft auf eine Maximalkraft begrenzt, welche indikativ für eine mechanische Überlastung des Polbereichs 14 der Zelle ist.

In einem Ausführungsbeispiel können mit Fig. 2b und Fig. 2c zwei verschiedene Situationen dargestellt sein, welche sich bei unterschiedlichen Längenausdehnungen der Zelle 4 ergeben. Die Zelle 4 weist beispielsweise in Fig. 2b gemäß einer Maßabweichung bzw. Toleranz eine geringe Längenausdehnung auf, wobei die Federkonstante des Kontaktelements 22 derart gewählt ist, dass die Federkraft eine sichere Anlage am Polbereich 14 bewirkt. In Fig. 2c weist beispielsweise die Zelle 4 gemäß einer Maßabweichung bzw. Toleranz eine große Längenausdehnung auf, was durch ein (weiteres) Einfedern des Kontaktelements 22 ausgeglichen wird, wobei die Federkraft eine Maximalkraft, welche indikativ für eine mechanische Überlastung des Polbereichs 14 der Zelle 4 ist, jedoch nicht überschreitet.

Der elektrische Kontakt wird über das Federkontaktelement als Kraftschluss bewirkt, wobei keine stoffschlüssige oder formschlüssige Kontaktierung vorliegt. Ein Löten, Kleben oder Schweißen der Kontaktelemente 22 an den Polbereich 14 kann entfallen.

Die Verbindungsplatte 20 ist als Schichtverbundmaterial aufweisend einen Metallkern 28 und beidseitige leitfähige Schichten 30 ausgestaltet. Die Verbindungsplatte 20 ist dafür eingerichtet, einen Wärmetransport zwischen den Zellen 4 zu bewirken, so dass etwaige Temperaturunterschiede zwischen den Zellen 4 ausgeglichen werden können. Die Kontaktelemente 22 können einen Wärmetransport von den Zellen 4 zu den Verbindungsplatten 20 bewirken. Die Verbindungsplatte 20 weist zudem ein Wärmeabfuhrelement 31 auf, welches vom Metallkern 28 aufgenommene und transportierte Wärme nach außen abgeben kann, z.B. über Kontakt zu einem Gehäuse der Anordnung 2 und/oder mindestens ein Kühlelement. Die elektrisch leitfähige Schicht 30 ist über eine Isolationsschicht 32 vom Metallkern 28 getrennt. Der Metallkern 28 führt bei Verwendung der Anordnung 2 keinen Strom. Über die Kontaktelemente 22 wird vielmehr ein elektrischer Kontakt zwischen einer der elektrisch leitfähigen Schicht 30 zum Polbereich 14 bewirkt. Die Ausgestaltung mit beidseitigen leitfähigen Schichten 30 erlaubt es beispielsweise, auch auf der anderen Seite der Verbindungsplatte 20 einen Kontakt zu weiteren Zellen zu bewirken (nicht dargestellt). Mindestens eine Durchkontaktierung für die Verbindungsplatte 20 ist vorgesehen, wobei mindestens eine Bohrung durch die Verbindungsplatte 20 mit einer Harzschicht und einer galvanisch aufgebrachten leitfähigen Schicht versehen ist. Die leitfähige Schicht bringt die beidseitigen leitfähigen Schichten 30 miteinander in Kontakt, so dass axial benachbarte Zellen 4 seriell geschaltet werden. Die Verbindungsplatte 20 kann weiter ein- oder beidseitig eine äußere isolierende Schicht aufweisen, welche an den Kontaktelementen 22 unterbrochen ist (nicht dargestellt).

Halteelemente 34 sind benachbart zu der Verbindungsplatte 20 vorgesehen, wobei die Halteelemente 34 die Zellen 4 in Axialrichtung positionieren. Die Halteelemente 34 können wie insbesondere in Fig. 2c gezeigt einen Formschluss mit den Zellen 4 zur Positionierung eingehen. Die Halteelemente 34 positionieren hierbei die Zellen 4 in Axialrichtung. Die Halteelemente 34 stehen hierzu an einem Randbereich 36 der Zellen 4 am Übergang zwischen dem umfangsseitigen Bereich 8 und der Stirnseite 10 mit den Zellen 4 in Kontakt. Eine mechanische Überlastung der Polbereiche 14 durch eine zu starke Federkraft des Federkontaktelements wird hierbei unterbunden. Die bei der Positionierung anfallenden Kräfte auf die Zelle 4 werden vorteilhafterweise auf den Randbereich 36 und damit auf das stabilere Gehäuse der Zelle 4 ausgeübt. Die Maßabweichung für die Längenausdehnung der Randbereiche 36 kann hierbei zudem geringer sein als für die Längenausdehnung der Polbereiche 14, so dass eine genauere Positionierung bewirkt wird.

Die Federkonstante des Federkontaktelements ist vorgegeben zumindest abhängig von einer Differenz der Höhe 38 des Federkontaktelements im entspannten Zustand relativ zur Verbindungsplatte 20 und der Höhe 40 des Halteelements 34 relativ zur Verbindungsplatte 20 (vgl. Fig. 2a). Durch die Differenz wird die maximale Einfederung des Kontaktelements 22 mitbestimmt und damit die maximale Federkraft, welche auf dem Polbereich 14 lasten kann (vgl. Fig. 2c, wobei der Randbereich 36 am Haltelement 34 anliegt und somit die Zelle 4 nicht weiter zur Verbindungsplatte 20 verschoben werden kann). Die Federkonstante wird derart bestimmt, dass eine Überlastung des Polbereichs 14 vermieden wird, auch wenn ein Formschluss der Zelle 4 mit den Halteelementen 34 erfolgt. Die Federkonstante des Federkontaktelements kann weiter vorgegeben sein abhängig von einer Höhendifferenz des Polbereichs 14 in Axialrichtung relativ zum Randbereich 36, beispielsweise wenn wie in der Fig. 2b-c dargestellt der Polbereich 14 über einen Poldeckel erhöht ausgebildet ist.

An den Halteelementen 34 sind zudem Kraftschlussmittel in Form von Klebeband vorgesehen (nicht dargestellt), welche die Zellen 4 über einen Kraftschluss halten können.

Die Halteelemente 34 sind zusätzlich mit Halterungselementen 42 insbesondere einstückig ausgebildet, wobei die Halterungselemente 42 zum Halten der Zellen senkrecht zur Axialrichtung 6 vorgesehen sind.

Das als Federkontaktelement ausgestaltete Kontaktelement 22 ist als Stanzteil aus Kupferberyllium ausgebildet. Wie in Fig. 2a weiter verdeutlicht, ist das Kontaktelement 22 als Blattfeder mit einem Kontaktbereich 44 ausgestaltet, welcher in Anlage zu dem Polbereich 14 zur Bildung des elektrischen Kontakts gebracht werden kann. Das Kontaktelement 22 ist optional mit einer Kontaktbeschichtung ausgebildet, welche eine galvanisch aufgebrachte Nickelschicht mit einer Schichtdicke von 1 µm bis 4 µm, insbesondere 2 µm bis 3 µm und eine Goldschicht mit einer Sichtdicke von 0,1 µm bis 2,0 µm, insbesondere von 0,6 µm bis 1,5 µm umfasst. Alternativ oder kumulativ kann die Kontaktbeschichtung an das Material des Polbereichs 14 angepasst sein, indem das Standardpotential der Kontaktbeschichtung in der elektrochemischen Spannungsreihe weniger als 1 V vom Standardpotential des Materials des Polbereichs 14 abweicht.

Im Ausführungsbeispiel aus Fig. 1 ist zudem an den zwei Verbindungsplatten 20, 24 ein Druckelement vorgesehen, wobei das Druckelement die zwei Verbindungsplatten 20, 24 mit einem vorgegebenen Abstand hält. Der Abstand kann abhängig von den Dimensionen der Zellen 4, der Federkonstanten des Kontaktelements 22 sowie der Halteelemente 34 gewählt werden. Durch die Festlegung des Abstands der Verbindungsplatten 20, 24 wird eine Baueinheit 46 gebildet für die Zellen 4, welche senkrecht zur Axialrichtung 6 benachbart angeordnet sind (d.h. einer "Lage" von Zellen 4 in Axialrichtung 6). Innerhalb der Baueinheit 46 werden etwaige Maßabweichungen der Zellen 4 in Längsrichtung durch die zuvor beschriebenen Federkontaktelemente ausgeglichen. Zudem wird für die Baueinheit 46 ein vorgegebenes Längenmaß eingehalten, wodurch die Anordnung weiterer Elemente in der Anordnung 2 vereinfacht wird. Beispielsweise kann ein Temperatursensor (nicht gezeigt) mittig am umfangsseitigen Bereich 8 einer Zelle 4 angeordnet werden. Ebenso können Balancerverbindungen (nicht gezeigt) vorgesehen sein, welche beispielsweise durch Leiterplatten zwischen den Verbindungsplatten 20, 24 gebildet werden.

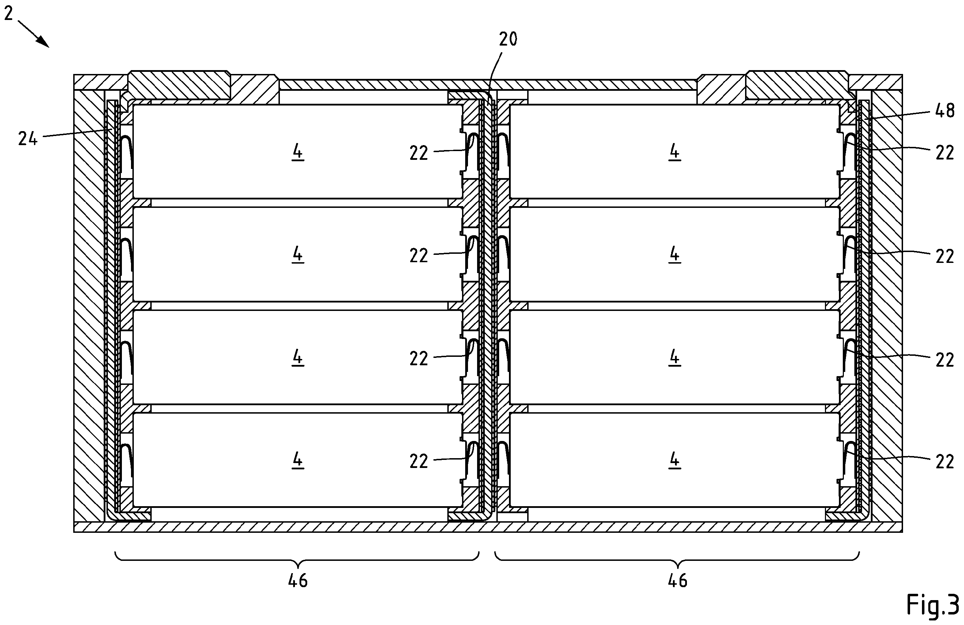

Fig. 3 zeigt eine schematische Ansicht eines weiteren Ausführungsbeispiels einer Anordnung 2 gemäß der ersten Lehre, wobei zusätzlich mehrere in Axialrichtung 6 benachbart angeordnete Zellen 4 vorgesehen sind. Die in Axialrichtung 6 benachbart angeordneten Zellen 4 sind jeweils zwischen im vorgegebenen Abstand gehaltenen Verbindungsplatten 20, 24, 48 angeordnet. Entsprechend werden mehrere Baueinheiten 46 in Axialrichtung 6 nebeneinander gebildet, wobei die Baueinheiten 46 jeweils mit dem in der Fig. 1 gezeigten Aufbau vergleichbar sind. In Fig. 3 sind zur Verdeutlichung nicht alle Bezugszeichen aus Fig. 1 wiedergegeben.

Jede der Baueinheiten 46 umfasst einen Ausgleich etwaiger Maßabweichungen der Zellen 4 in Axialrichtung durch die als Federkontaktelemente ausgebildeten Kontaktelemente 22, 26. Somit wird erreicht, dass sich Maßabweichungen einzelner Zellen 4 nicht zu den benachbarten Baueinheiten 46 fortsetzen. Die Ausbildung der Baueinheiten 46 erleichtert zudem die Herstellung, da Anordnungen modular ausgebildet und durch Kombinationen von Baueinheiten 46 gebildet werden können.

In den Fig. 1 - 3 ist gezeigt, dass beide Polbereiche 14, 18 der Zellen 4 von Federkontaktelementen (Kontaktelemente 22, 26) kontaktiert werden. Alternativ kann auch jede Zelle 4 lediglich mit einem als Federkontaktelement ausgebildeten Kontaktelement 22 an einem Polbereich 14, 18 kontaktiert werden. Beispielsweise wird der jeweils andere Polbereich 14, 18 dann durch ein starres Kontaktelement kontaktiert oder liegt direkt an der Verbindungsplatte an.

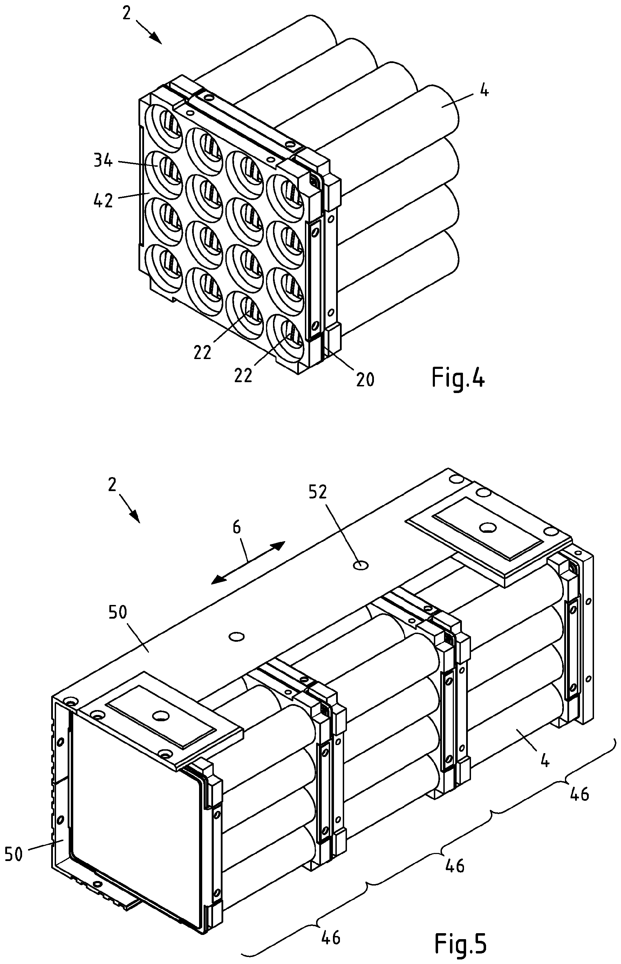

Fig. 4 zeigt eine schematische Ansicht eines weiteren Ausführungsbeispiels einer Anordnung 2 gemäß der ersten Lehre in einer perspektivischen Darstellung. Hierbei ist zu erkennen, dass die insbesondere einstückige Ausführung der Halteelemente 34 mit den Halterungselementen 42 eine Platte mit Vertiefungen für die Stirnseite 10 der Zellen 4 und Durchgänge für die Kontaktelemente 22 bildet.

Die als Federkontaktelemente ausgeführten Kontaktelemente 22 sind zudem als gebogenes Stanzteil aus einem Metallblech mit zwei Kontaktbereichen ausgebildet.

Fig. 5 zeigt eine schematische Ansicht eines weiteren Ausführungsbeispiels einer Anordnung 2 gemäß der ersten Lehre in einer perspektivischen Darstellung. Hierbei sind mehrere in Axialrichtung 6 benachbarte Zellen 4 vorgesehen, wobei drei Baueinheiten 46 gebildet werden, die jeweils auf einem vorgegebenen Abstand gehalten werden.

Druckelemente 50 sind vorgesehen, welche über Verbindungsmittel 52 mit Verbindungsplatten verbunden sind. Die Druckelemente 50 können optional auch einen Teil eines Gehäuses für die Anordnung 2 bilden. Die Druckelemente 50 können auch dafür ausgebildet sein, einen Wärmetransport von den Verbindungsplatten nach außen zu verbessern. Die Druckelemente 50 können die jeweiligen Verbindungsplatten auf einem vorgegebenen Abstand halten, insbesondere über eine Haltekraft von höchstens 50 % der Überlastkraft des Zellgehäuses. Der vorgegebene Abstand wird vorgegeben abhängig von der Nennlänge der Zellen 4 in Axialrichtung 6 und der Höhe 40 der Halteelemente 34 relativ zur Verbindungsplatte 20, unter Berücksichtigung der Federkonstanten des Kontaktelements 22. Der vorgegebene Abstand wird so gewählt, dass durch das Federkontaktelement einerseits eine sichere Anlage an den Polbereich 14 bewirkt wird, und andererseits die Federkraft unterhalb einer Maximalkraft begrenzt wird, welche indikativ für eine mechanische Überlastung des Polbereichs 14 der Zelle 4 ist.

## Patentansprüche

1. Anordnung für Zellen (4) zur Speicherung elektrischer Energie,
- mit mindestens zwei Zellen (4),
- wobei die mindestens zwei Zellen (4) jeweils eine Axialrichtung (6), einen umfangsseitigen Bereich (8) und zwei Stirnseiten (10, 12) aufweisen,
- wobei die Stirnseiten (10, 12) einander in Axialrichtung (6) gegenüber liegend angeordnet sind und mindestens ein Polbereich (14, 18) an einer Stirnseite (10, 12) vorgesehen ist,
- mit mindestens einer Verbindungsplatte (20, 24, 48),
- wobei die mindestens zwei Zellen (4) an der mindestens einen Verbindungsplatte (20, 24, 48) angeordnet sind,
- wobei Kontaktelemente (22) zwischen der mindestens einen Verbindungsplatte (20, 24, 48) und den Polbereichen (14, 18) der mindestens zwei Zellen (4) für einen elektrischen Kontakt vorgesehen sind,
- wobei mindestens eines der Kontaktelemente (22), welches in Kontakt zu einer Zelle (4) steht, als Federkontaktelement ausgestaltet ist, welches in einem verformten Zustand eine Federkraft zur Anlage an dem jeweiligen Polbereich (14, 18) der mindestens zwei Zellen (4) zur Bildung des elektrischen Kontakts zwischen der mindestens einen Verbindungsplatte (20, 24, 48) und Polbereich (14, 18) bereitstellt,
wobei mindestens ein Halteelement (34) benachbart zu der mindestens einen Verbindungsplatte (20, 24, 48) vorgesehen ist, wobei das mindestens eine Halteelement (34) mindestens eine der mindestens zwei Zellen (4) in Axialrichtung (6) positioniert,
**dadurch gekennzeichnet, dass**
eine Federkonstante des Federkontaktelements vorgegeben ist, welche zumindest abhängig ist von:
- der Höhe (38) des Federkontaktelements im entspannten Zustand relativ zur Verbindungsplatte (20) und
- der Höhe (40) des Halteelements (34) relativ zur Verbindungsplatte (20).

2. Anordnung nach Anspruch 1,
**dadurch gekennzeichnet, dass**
die Verbindungsplatte (20, 24, 48) als Schichtverbundmaterial aufweisend mindestens einen Metallkern (28) und mindestens eine leitfähige Schicht (30) ausgestaltet ist.

3. Anordnung nach Anspruch 1 oder 2,
**dadurch gekennzeichnet, dass**
- das mindestens eine Halteelement (34) mindestens eine der mindestens zwei Zellen (4) in Axialrichtung (6) über einen Formschluss positioniert.

4. Anordnung nach einem der Ansprüche 1 bis 3,
**dadurch gekennzeichnet, dass**
- das mindestens ein Halteelement (34) die Zellen (4) über Kontakt an einem Randbereich (36) am Übergang zwischen dem umfangsseitigen Bereich (8) und der jeweiligen Stirnseite (10, 12) in Axialrichtung (6) positioniert.

5. Anordnung nach einem der Ansprüche 1 bis 4,
**dadurch gekennzeichnet, dass**
- an dem mindestens einem Halteelement (34) Kraftschlussmittel vorgesehen sind, welche mindestens eine der Zellen (4) über einen Kraftschluss halten.

6. Anordnung nach Anspruch 5,
**dadurch gekennzeichnet, dass**
die Kraftschlussmittel ein elastisches Material umfassen.

7. Anordnung nach einem der Ansprüche 1 bis 6,
**dadurch gekennzeichnet, dass**
mindestens zwei Verbindungsplatten (20, 24, 48) und mindestens ein Druckelement (50) vorgesehen sind, wobei das Druckelement (50) die mindestens zwei Verbindungsplatten (20, 24, 48) mit einem vorgegebenen Abstand hält.

8. Anordnung nach Anspruch 7,
**dadurch gekennzeichnet, dass**
- mehrere in Axialrichtung (6) benachbart angeordnete Zellen (4) vorgesehen sind,
- wobei die in Axialrichtung (6) benachbart angeordneten Zellen (4) jeweils zwischen im vorgegebenen Abstand gehaltenen Verbindungsplatten (20, 24, 48) angeordnet sind.

9. Anordnung nach einem der Ansprüche 1 bis 8,
**dadurch gekennzeichnet, dass**
mindestens ein Halterungselement (42) zum Halten der Zellen (4) senkrecht zur Axialrichtung (6) vorgesehen ist, wobei das mindestens eine Halterungselement (42) insbesondere einstückig mit dem mindestens einen Halteelement (34) ausgeführt ist.

10. Anordnung nach einem der Ansprüche 1 bis 9,
**dadurch gekennzeichnet, dass**
das Federkontaktelement aus einer Kupferlegierung, insbesondere aus Kupferberyllium ausgebildet ist.

11. Anordnung nach einem der Ansprüche 1 bis 10,
**dadurch gekennzeichnet, dass**
- das Federkontaktelement als Formfeder mit mehreren Kontaktbereichen (44) ausgebildet ist, welche in Anlage zu dem jeweiligen Polbereich (14, 18) zur Bildung des elektrischen Kontakts steht.

12. Anordnung nach einem der Ansprüche 1 bis 11,
**dadurch gekennzeichnet, dass**
dass mindestens eines der Kontaktelemente (22) mit einer Kontaktbeschichtung ausgebildet ist, insbesondere einer Kontaktbeschichtung basierend auf Edelmetall.

13. Anordnung nach einem der Ansprüche 1 bis 12,
**dadurch gekennzeichnet, dass**
dass mindestens eines der Kontaktelemente (22) mit einer Kontaktbeschichtung ausgebildet ist, dessen Standardpotential in der elektrochemischen Spannungsreihe weniger als 1 V vom Standardpotential des Materials des Polbereichs (14, 18) abweicht.

14. Verfahren zur Herstellung einer Anordnung nach einem der Ansprüche 1 bis 13,
- bei dem mindestens zwei Zellen (4) an mindestens einer Verbindungsplatte (20, 24, 48) angeordnet werden,
- wobei die mindestens zwei Zellen (4) jeweils eine Axialrichtung (6), einen umfangsseitigen Bereich (8) und zwei Stirnseiten (10, 12) aufweisen,
- wobei die Stirnseiten (10, 12) einander in Axialrichtung (6) gegenüber liegend angeordnet sind und mindestens ein Polbereich (14, 18) an einer Stirnseite (10, 12) vorgesehen ist,
- bei dem über Kontaktelemente (22) zwischen der mindestens einen Verbindungsplatte (20, 24, 48) und den Polbereichen (14, 18) der mindestens zwei Zellen (4) ein elektrischer Kontakt bewirkt wird und
- bei dem mindestens ein Federkontaktelement als Kontaktelement (22) verwendet wird, welches in einen verformten Zustand gebracht wird, so dass eine Federkraft zur Anlage an dem jeweiligen Polbereich (14, 18) der mindestens zwei Zellen (4) zur Bildung des elektrischen Kontakts zwischen der mindestens einen Verbindungsplatte (20, 24, 48) und Polbereich bereitgestellt wird, wobei mindestens ein Halteelement (34) benachbart zu der mindestens einen Verbindungsplatte (20, 24, 48) vorgesehen ist, wobei das mindestens eine Halteelement (34) mindestens eine der mindestens zwei Zellen (4) in Axialrichtung (6) positioniert, wobei eine Federkonstante des Federkontaktelements vorgegeben ist, welche zumindest abhängig ist von:
- der Höhe (38) des Federkontaktelements im entspannten Zustand relativ zur Verbindungsplatte (20) und
- der Höhe (40) des Halteelements (34) relativ zur Verbindungsplatte (20).

15. Verwendung eines Federkontaktelements in einer Anordnung nach einem der Ansprüche 1 bis 13,
- mit mindestens zwei Zellen (4),
- wobei die mindestens zwei Zellen (4) jeweils eine Axialrichtung (6), einen umfangsseitigen Bereich (8) und zwei Stirnseiten (10, 12) aufweisen,
- wobei die Stirnseiten (10, 12) einander in Axialrichtung (6) gegenüber liegend angeordnet sind und mindestens ein Polbereich (14, 18) an einer Stirnseite (10, 12) vorgesehen ist,
- mit mindestens einer Verbindungsplatte (20, 24, 48),
- wobei die mindestens zwei Zellen (4) an der mindestens einen Verbindungsplatte (20, 24, 48) angeordnet sind,
- wobei Kontaktelemente (22) zwischen der mindestens einen Verbindungsplatte (20, 24, 48) und den Polbereichen (14, 18) der mindestens zwei Zellen (4) für einen elektrischen Kontakt vorgesehen sind, wobei mindestens ein Halteelement (34) benachbart zu der mindestens einen Verbindungsplatte (20, 24, 48) vorgesehen ist, wobei das mindestens eine Halteelement (34) mindestens eine der mindestens zwei Zellen (4) in Axialrichtung (6) positioniert, wobei eine Federkonstante des Federkontaktelements vorgegeben ist, welche zumindest abhängig ist von:
- der Höhe (38) des Federkontaktelements im entspannten Zustand relativ zur Verbindungsplatte (20) und
- der Höhe (40) des Halteelements (34) relativ zur Verbindungsplatte (20).

## Claims

1. Arrangement for cells (4) for storing electrical energy,
- with at least two cells (4),
- wherein the at least two cells (4) each have an axial direction (6), a peripheral region (8) and two end faces (10, 12),
- wherein the end faces (10, 12) are arranged opposite one another in the axial direction (6) and at least one pole region (14, 18) is provided on an end face (10, 12),
- with at least one connecting plate (20, 24, 48),
- wherein the at least two cells (4) are arranged on the at least one connecting plate (20, 24,48),
- wherein contact elements (22) are provided between the at least one connecting plate (20, 24, 48) and the pole regions (14, 18) of the at least two cells (4) for an electrical contact,
- wherein at least one of the contact elements (22), which is in contact with a cell (4), is designed as a spring contact element which, in a deformed state, provides a spring force for bearing against the respective pole region (14, 18) of the at least two cells (4) for forming the electrical contact between the at least one connecting plate (20, 24, 48) and pole region (14, 18),
wherein at least one retaining element (34) is provided adjacent to the at least one connecting plate (20, 24, 48), wherein the at least one retaining element (34) positions at least one of the at least two cells (4) in the axial direction (6),
**characterized in that**
a spring constant of the spring contact element is predetermined which is at least dependent on:
- the height (38) of the spring contact element in the relaxed state relative to the connecting plate (20) and
- the height (40) of the retaining element (34) relative to the connecting plate (20).

2. Arrangement according to claim 1,
**characterised in that**
the connecting plate (20, 24, 48) is designed as a layered composite material comprising at least one metal core (28) and at least one conductive layer (30).

3. Arrangement according to claim 1 or 2,
**characterized in that**
- the at least one retaining element (34) positions at least one of the at least two cells (4) in the axial direction (6) by means of a positive-locking fit.

4. Arrangement according to one of claims 1 to 3,
**characterized in that**
- the at least one holding element (34) positions the cells (4) in the axial direction (6) via contact at an edge region (36) at the transition between the circumferential region (8) and the respective end face (10, 12).

5. Arrangement according to one of the claims 1 to 4,
**characterised in that**
- force-locking means are provided on the at least one retaining element (34), which hold at least one of the cells (4) via a force-locking fit

6. Arrangement according to claim 5,
**characterized in that**
the force-locking means comprise an elastic material.

7. Arrangement according to one of claims 1 to 6,
**characterized in that**
at least two connecting plates (20, 24, 48) and at least one pressure element (50) are provided, wherein the pressure element (50) holds the at least two connecting plates (20, 24, 48) at a predetermined distance.

8. Arrangement according to claim 7,
**characterized in that**
- a plurality of cells (4) arranged adjacent in the axial direction (6) are provided,
- wherein the cells (4) arranged adjacent in the axial direction (6) are each arranged between connecting plates (20, 24, 48) held at the predetermined distance.

9. Arrangement according to one of claims 1 to 8,
**characterised in that**
at least one holding element (42) is provided for holding the cells (4) perpendicular to the axial direction (6), wherein the at least one holding element (42) is designed in particular in one piece with the at least one retaining element (34).

10. Arrangement according to one of claims 1 to 9,
**characterized in that**
the spring contact element is formed from a copper alloy, in particular from copper beryllium.

11. Arrangement according to one of claims 1 to 10,
**characterised in that**
- the spring contact element is formed as a shaped spring with a plurality of contact regions (44), which bears against the respective pole area (14, 18) for forming the electrical contact.

12. Arrangement according to one of claims 1 to 11,
**characterized in that**
at least one of the contact elements (22) is formed with a contact coating, in particular a contact coating based on precious metal.

13. Arrangement according to one of the claims 1 to 12,
**characterized in that**
at least one of the contact elements (22) is formed with a contact coating whose standard potential in the electrochemical voltage series deviates by less than 1 V from the standard potential of the material of the pole region (14, 18).

14. Method for manufacturing an arrangement according to one of claims 1 to 13,
- in which at least two cells (4) are arranged on at least one connecting plate (20, 24, 48),
- wherein the at least two cells (4) each have an axial direction (6), a peripheral region (8) and two end faces (10, 12),
- wherein the end faces (10, 12) are arranged opposite one another in the axial direction (6) and at least one pole region (14, 18) is provided on an end face (10, 12),
- in which an electrical contact is established via contact elements (22) between the at least one connecting plate (20, 24, 48) and the pole regions (14, 18) of the atleast two cells (4) and
- in which at least one spring contact element is used as contact element (22), which is brought into a deformed state, so that a spring force is provided for bearing against the respective pole region (14, 18) of the at least two cells (4) for forming the electrical contact between the at least one connecting plate (20, 24, 48) and pole region (14, 18), wherein at least one retaining element (34) is provided adjacent to the at least one connecting plate (20, 24, 48), wherein the at least one retaining element (34) positions at least one of the at least two cells (4) in the axial direction (6), wherein a spring constant of the spring contact element is predetermined which is at least dependent on:
- the height (38) of the spring contact element in the relaxed state relative to the connecting plate (20) and
- the height (40) of the retaining element (34) relative to the connecting plate (20).

15. Use of a spring contact element in an arrangement according to one of claims 1 to 13,
- with at least two cells (4),
- wherein the at least two cells (4) each have an axial direction (6), a peripheral region (8) and two end faces (10, 12),
- wherein the end faces (10, 12) are arranged opposite one another in the axial direction (6) and at least one pole region (14, 18) is provided on an end face (10, 12).
- with at least one connecting plate (20, 24, 48),
- wherein the at least two cells (4) are arranged on the at least one connecting plate (20, 24, 48),
- wherein contact elements (22) are provided between the at least one connecting plate (20, 24, 48) and the pole regions (14, 18) of the at least two cells (4) for an electrical contact, wherein at least one retaining element (34) is provided adjacent to the at least one connecting plate (20, 24, 48), wherein the at least one retaining element (34) positions at least one of the at least two cells (4) in the axial direction (6), wherein a spring constant of the spring contact element is predetermined which is at least dependent on:
- the height (38) of the spring contact element in the relaxed state relative to the connecting plate (20) and
- the height (40) of the retaining element (34) relative to the connecting plate (20).

## Revendications

1. Arrangement pour des cellules (4) pour le stockage d'énergie électrique,
- avec au moins deux cellules (4),
- dans lequel les au moins deux cellules (4) présentent chacune une direction axiale (6), une zone circonférentielle (8) et deux faces frontales (10, 12),
- dans lequel les faces frontales (10, 12) sont disposées en face l'une à l'autre dans la direction axiale (6) et au moins une zone de pôle (14, 18) est prévue sur une face frontale (10, 12),
- avec au moins une plaque de connexion (20, 24, 48),
- dans lequel les au moins deux cellules (4) sont disposées à l'au moins une plaque de connexion,
- dans lequel des éléments de contact (22) sont prévus entre l'au moins une plaque de connexion (20, 24, 48) et les zones de pôle (14, 18) des au moins deux cellules (4) pour un contact électrique,
- dans lequel au moins l'un des éléments de contact (22), qui est en contact avec une cellule (4), est conçu comme un élément de contact à ressort qui, dans un état déformé, fournit une force de ressort pour s'appuyer sur la zone de pôle respective (14, 18) des au moins deux cellules (4) pour former le contact électrique entre l'au moins une plaque de connexion (20, 24, 48) etla zone de pôle (14, 18),
dans lequel au moins un élément de retenue (34) est prévu adjacent à l'au moins une plaque de connexion (20, 24, 48), dans lequel l'au moins un élément de retenue (34) positionne au moins l'une des au moins deux cellules (4) dans la direction axiale (6),
**caractérisé en ce qu'**
une constante de ressort de l'élément de contact à ressort est prédéfinie, qui dépend au moins de :
- la hauteur (38) de l'élément de contact à ressort à l'état détendu par rapport à la plaque de connexion (20) et
- la hauteur (40) de l'élément de retenue (34) par rapport à la plaque de connexion (20).

2. Arrangement selon la revendication 1,
**caractérisé en ce que**
la plaque de connexion (20, 24, 48) est conçue comme un matériau composite stratifié présentant au moins un noyau métallique (28) et au moins une couche conductrice (30).

3. Arrangement selon la revendication 1 ou 2,
**caractérisé en ce que**
- l'au moins un élément de retenue (34) positionne au moins l'une des au moins deux cellules (4) dans la direction axiale (6) au moyen d'une verrouillage positif.

4. Arrangement selon l'une des revendications 1 à 3,
**caractérisé en ce que**
- l'au moins un élément de retenue (34) positionne les cellules (4) dans la direction axiale (6) par contact sur une zone de bordure (36) à la transition entre la zone circonférentielle (8) et la face frontale (10, 12) respective.

5. Arrangement selon l'une des revendications 1 à 4,
**caractérisé en ce que**
- des moyens de verrouillage par force sont prévus sur l'au moins un élément de retenue (34), qui maintiennent au moins l'une des cellules (4) au moyen d'une verrouillage par force.

6. Arrangement selon la revendication 5,
**caractérisé en ce que**
les moyens de verrouillage par force comprennent un matériau élastique.

7. Arrangement selon l'une des revendications 1 à 6,
**caractérisé en ce qu'**
au moins deux plaques de connexion (20, 24, 48) et au moins un élément de pression (50) sont prévus, dans lequel l'élément de pression (50) maintienne les au moins deux plaques de connexion (20, 24, 48) avec un écart prédéterminé.

8. Arrangement selon la revendication 7,
**caractérisé en ce que**
- plusieurs cellules (4) disposées de manière adjacente dans la direction axiale (6) sont prévues,
- dans lequel les cellules (4) disposées de manière adjacente dans la direction axiale (6) sont chacune disposées entre des plaques de connexion (20, 24, 48) maintenues à l'écart prédéterminé.

9. Arrangement selon l'une des revendications 1 à 8,
**caractérisé en ce qu'**
au moins un élément de maintien (42) est prévu pour maintenir les cellules (4) perpendiculairement à la direction axiale (6), dans lequel l'au moins un élément de maintien (42) est en particulier formé solidairement avec l'au moins un élément de retenue.

10. Arrangement selon l'une des revendications 1 à 9,
**caractérisé en ce que**
l'élément de contact à ressort est constitué d'un alliage de cuivre, en particulier de de cuivre au béryllium.

11. Arrangement selon l'une des revendications 1 à 10,
**caractérisé en ce que**
- l'élément de contact à ressort est formé comme un ressort moulé avec plusieurs zones de contact (44), qui s'appuie sur la zone de pôle respective (14, 18) pour former le contact électrique.

12. Arrangement selon l'une des revendications 1 à 11,
**caractérisé en ce qu'**
au moins l'un des éléments de contact (22) est formé avec un revêtement de contact, en particulier un revêtement de contact à base de métal précieux.

13. Arrangement selon l'une des revendications 1 à 12,
**caractérisé en ce qu'**
au moins l'un des éléments de contact (22) est formé avec un revêtement de contact dont le potentiel standard dans la série de tensions électrochimiques diffère de moins de 1 V du potentiel standard du matériau de la zone de pôle (14, 18).

14. Procédé de fabrication d'un arrangement selon l'une des revendications 1 à 13,
- dans lequel au moins deux cellules (4) sont disposées sur au moins une plaque de connexion (20, 24, 48),
- dans lequel les au moins deux cellules (4) présentent chacune une direction axiale (6), une zone circonférentielle (8) et deux faces frontales (10, 12),
- dans lequel les faces frontales (10, 12) sont disposées en face l'une à l'autre dans la direction axiale (6) et au moins une zone de pôle (14, 18) est prévue sur une face frontale (10, 12),
- dans lequel un contact électrique est établi par des éléments de contact (22) entre l'au moins une plaque de connexion (20, 24, 48) et les zones de pôle (14, 18) des au moins deux cellules (4) et
- dans lequel au moins un élément de contact à ressort est utilisé comme élément de contact (22), qui est amené dans un état déformé de sorte qu'une force de ressort est fourni pour s'appuyer sur la zone de pôle (14, 18) respective des au moins deux cellules (4) pour former le contact électrique entre l'au moins une plaque de connexion (20, 24, 48) et la zone de pôle, dans lequel au moins un élément de retenue (34) est prévu adjacent à l'au moins une plaque de connexion (20, 24, 48), dans lequel l'au moins un élément de retenue (34) positionne au moins l'une des au moins deux cellules (4) dans la direction axiale (6), dans lequel une constante de ressort de l'élément de contact à ressort est prédéfinie, qui dépend au moins de :
- la hauteur (38) de l'élément de contact à ressort à l'état détendu par rapport à la plaque de connexion (20) et
- la hauteur (40) de l'élément de retenue (34) par rapport à la plaque de connexion (20).

15. Utilisation d'un élément de contact à ressort dans un arrangement selon l'une des revendications 1 à 13,
- avec au moins deux cellules (4),
- dans lequel les au moins deux cellules (4) présentent chacune une direction axiale (6), une zone circonférentielle (8) et deux faces frontales (10, 12),
- dans lequel les faces frontales (10, 12) sont disposées en face l'une à l'autre dans la direction axiale (6) et au moins une zone de pôle (14, 18) est prévue sur une face frontale (10, 12),
- avec au moins une plaque de connexion (20, 24, 48),
- dans lequel les au moins deux cellules (4) sont disposées à l'au moins une plaque de connexion (20, 24, 48),
- dans lequel des éléments de contact (22) sont prévus entre l'au moins une plaque de connexion (20, 24, 48) et les zones de pôle (14, 18) des au moins deux cellules (4) pour un contact électrique, dans lequel au moins un élément de retenue (34) est prévu adjacent à l'au moins une plaque de connexion (20, 24, 48), dans lequel l'au moins un élément de retenue (34) positionne au moins l'une des au moins deux cellules (4) dans la direction axiale (6), dans lequel une constante de ressort de l'élément de contact à ressort est prédéfinie, qui dépend au moins de :
- la hauteur (38) de l'élément de contact à ressort à l'état détendu par rapport à la plaque de connexion (20) et
- la hauteur (40) de l'élément de retenue (34) par rapport à la plaque de connexion (20).
